(19) Europäisches Patentamt
European Patent Office
Office européen des brevets

(11) **EP 4 052 807 A1**

(12) **EUROPEAN PATENT APPLICATION**
published in accordance with Art. 153(4) EPC

(43) Date of publication:
**07.09.2022 Bulletin 2022/36**

(21) Application number: **20881790.8**

(22) Date of filing: **03.07.2020**

(51) International Patent Classification (IPC):
**B05D 3/00** (2006.01) **B05D 3/02** (2006.01)
**B05D 5/06** (2006.01) **B05D 7/24** (2006.01)
**C09D 5/00** (2006.01) **C09D 201/06** (2006.01)
**C09D 201/08** (2006.01) **C09D 7/63** (2018.01)
**C09D 7/65** (2018.01)

(52) Cooperative Patent Classification (CPC):
**B05D 3/00; B05D 3/02; B05D 5/06; B05D 7/24;
C09D 5/00; C09D 7/63; C09D 7/65; C09D 201/06;
C09D 201/08**

(86) International application number:
**PCT/JP2020/026283**

(87) International publication number:
**WO 2021/084802 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.11.2019 JP 2019200194**

(71) Applicant: **Kansai Paint Co., Ltd
Amagasaki-shi, Hyogo 661-8555 (JP)**

(72) Inventor: **TOMIZAWA, Shigeru
Hiratsuka-shi, Kanagawa 254-8562 (JP)**

(74) Representative: **Cohausz & Florack
Patent- & Rechtsanwälte
Partnerschaftsgesellschaft mbB
Bleichstraße 14
40211 Düsseldorf (DE)**

(54) **AQUEOUS COATING COMPOSITION**

(57)     Provided is an aqueous coating composition which has excellent storage stability and whereby high coating film performance in terms of hardness, water resistance, etc., can be exhibited even when the aqueous coating composition is cured at a relatively low temperature. Disclosed is an aqueous coating composition which contains (A) a resin containing hydroxyl groups and carboxyl groups, (B) a blocked polyisocyanate compound, (C) a phosphate-group-containing compound, and (D) a basic compound, and which has a pH in the range of 7.0-8.2, wherein the basic compound (D) contains a specific quantity of (D1) a basic compound which has an acid dissociation constant (PKa) in the range of 7.0-8.5 and a boiling point in the range of 100-200°C.

EP 4 052 807 A1

**Description**

FIELD

The present invention relates to an aqueous coating composition.

BACKGROUND

A widely employed method for painting of automobiles is a method of forming a multilayer coating film by a 3-coat, 2-bake (3C2B) system in which an electrodeposition coating is carried out on an article to be coated, after which the procedure of intermediate coating material application → bake curing → aqueous base coating material application → preheating → clear coating material application → bake curing is carried out, but in recent years from the viewpoint of achieving energy savings, it is becoming more common to employ 3-coat, 1-bake (3C1B) systems that eliminate the bake curing step following application of the intermediate coating material, wherein the electrodeposition coating is carried out on an article to be coated, and then the procedure of aqueous intermediate coating material application → preheating as necessary → aqueous base coating material application → preheating → clear coating material application → bake curing is carried out.

Even more recently it has been attempted to further lower the heating temperature in the bake curing step in order to further reduce energy consumption.

However, coating compositions with high curability even at relatively low heating temperatures generally exhibit high reactivity and thus have insufficient storage stability.

Automobile body painted parts include "outer plates" that are visible from outside of the completed vehicle, and "inner plates" that are not visible from the outside, the latter needing less attention to outer appearance than the former. For outer plates, therefore, after electrodeposition coating of articles to be coated, multilayer coating films with excellent outer appearance are formed by coating of the aforementioned aqueous intermediate coating materials, aqueous base coating materials and clear coating materials, while for inner plates, aqueous base coating materials are coated over the electrodeposition coating film to form base coating films, thereby reducing the number of inner plate coating steps and different types of coating materials used. In this case, since the coating film on the uppermost layer of an inner plate is a base coating film formed of an aqueous base coating material, the base coating film must have relatively high hardness and water resistance.

When the heating temperature is relatively low in the bake curing step, however, the base coating film formed of the aqueous base coating material often fails to exhibit adequate hardness and water resistance.

PTL 1 describes a coating composition comprising, as essential components, (A) a pyrazole-blocked polyisocyanate compound comprising in the molecule two or more tertiary isocyanate groups blocked with a pyrazole compound, and (B) a hydroxyl group-containing resin with a hydroxyl value of 10 to 250 mgKOH/g and a weight-average molecular weight of 1,000 to 200,000, wherein it is possible to obtain excellent one-solution storage stability and sufficient curability and film performance even under baking conditions at relatively low temperature of about 100°C, as well as satisfactory resistance to yellowing under heat during baking. Even when the aforementioned coating composition is used as a base coating material, however, the film performance such as hardness and water resistance has not always been adequate when a clear coating material is not coated on the base layer formed by the base coating material.

[CITATION LIST]

[PATENT LITERATURE]

[PTL 1] Japanese Unexamined Patent Publication No. 2005-225907

SUMMARY

[TECHNICAL PROBLEM]

The present invention provides an aqueous coating composition that has excellent storage stability and can exhibit high film performance even when cured at relatively low temperature.

[SOLUTION TO PROBLEM]

As a result of conducting much research toward achieving the object stated above, the present inventors have found that the object can be achieved by an aqueous coating composition comprising (A) a hydroxyl group- and carboxyl group-containing resin, (B) a blocked polyisocyanate compound, (C) a phosphate group-containing compound and (D) a basic compound, wherein the basic compound (D) comprises (D1) a basic compound with an acid dissociation constant (PKa) in the range of 7.0 to 8.5 and a boiling point in the range of 100 to 200°C, the content ratio of the basic compound (D1) is in the range of 50 to 100 mass% based on the mass of the basic compound (D), and the pH of the aqueous coating composition is in the range of 7.0 to 8.2.

According to the invention, an aqueous coating composition, a method of forming a coating film and a coating method including the following embodiments are provided.

1. An aqueous coating composition comprising (A) a hydroxyl group- and carboxyl group-containing resin, (B) a blocked polyisocyanate compound, (C) a phosphate group-containing compound and (D) a basic compound, wherein the basic compound (D) comprises (D1) a basic compound having an acid dissociation constant (PKa) in the range of 7.0 to 8.5 and a boiling point in the range of 100 to 200°C, the content ratio of the basic compound (D1) is in the range of 50 to 100 mass% based on the mass of the basic compound (D), and the pH of the aqueous coating composition is in the range of 7.0 to 8.2.

2. The aqueous coating composition according to 1. above, wherein at least a portion of the blocking agent of the blocked polyisocyanate compound (B) is an active methylene-based blocking agent.

3. The aqueous coating composition according to 1. or 2. above, wherein at least one type of the phosphate group-containing compound (C) is a phosphate group-containing resin (C1).

4. The aqueous coating composition according to 3. above, wherein at least one type of the phosphate group-containing resin (C1) is a phosphate group-containing acrylic resin (C1').

5. The aqueous coating composition according to any one of 1. to 4. above, wherein the basic compound (D1) having an acid dissociation constant (PKa) in the range of 7.0 to 8.5 and a boiling point in the range of 100 to 200°C is N-methylmorpholine and/or N-ethylmorpholine.

6. The aqueous coating composition according to any one of 1. to 5. above, further comprising a melamine resin (E).

7. A method of forming a coating film, comprising applying an aqueous coating composition according to any one of 1. to 6. above onto an article to be coated to form an uncured colored coating film, and then heating and curing the uncured colored coating film at a temperature in the range of 60 to 110°C.

8. An automobile body coating method comprising:

a step of forming a first multilayer coating film on an outer plate of an automobile body, and
a step of forming a second coating film on an inner plate of an automobile body, wherein the step of forming the first multilayer coating film includes:

(1a) an outer plate colored base coating film-forming step in which an aqueous coating composition (X) is coated onto an outer plate of the automobile body to form an uncured outer plate colored base coating film (BCo),
(1b) an outer plate clear coating film-forming step in which a clear coating material (Y) is coated onto the uncured outer plate colored base coating film (BCo) to form an uncured outer plate clear coating film (CCo), and
(1c) a baking step in which the uncured outer plate colored base coating film (BCo) and the uncured outer plate clear coating film (CCo) are heated to simultaneously cure the coating films,
the step of forming the second coating film includes:
(2a) an inner plate colored coating film-forming step in which the aqueous coating composition (X) is coated onto an inner plate of the automobile body to form an uncured inner plate colored coating film (PCi), and
(2b) a baking step in which the uncured inner plate colored coating film (PCi) is heated and cured, and the aqueous coating composition (X) is an aqueous coating composition according to any one of 1. to 6. above.

9. The automobile body coating method according to 8. above, wherein the heating temperature in the baking step (1c) and the baking step (2b) is in the range of 60 to 110°C.

10. The automobile body coating method according to 8. or 9. above, wherein the baking step (1c) and the baking step (2b) are carried out simultaneously.

[ADVANTAGEOUS EFFECTS OF INVENTION]

The aqueous coating composition of the invention has excellent storage stability and can form a coating film exhibiting excellent film performance including high hardness and water resistance even when cured at relatively low temperature.

DESCRIPTION OF EMBODIMENTS

The aqueous coating composition of the invention will now be explained in detail.

Aqueous coating composition

The aqueous coating composition of the invention comprises (A) a hydroxyl group- and carboxyl group-containing resin, (B) a blocked polyisocyanate compound, (C) a phosphate group-containing compound and (D) a basic compound, and has a pH in the range of 7.0 to 8.2, wherein the basic compound (D) comprises a basic compound (D1) with an acid dissociation constant (PKa) in the range of 7.0 to 8.5 and a boiling point in the range of 100 to 200°C, and the content ratio of the basic compound (D1) is in the range of 50 to 100 mass% based on the mass of the basic compound (D).

For the present purpose, "aqueous coating material" is a term used in contrast to "organic solvent-based coating material", and generally refers to a coating material comprising a coating film-forming resin and/or pigment dispersed and/or dissolved in water or a medium composed mainly of water (an aqueous medium). An organic solvent-based coating material is a coating material wherein the solvent used contains substantially no water, or wherein all or virtually all of the solvent used is an organic solvent.

The aqueous coating composition of the invention has a pH in the range of 7.0 to 8.2.

If the pH is 7.0 or greater it will be possible to obtain an aqueous coating composition with excellent storage stability, and if it is 8.2 or lower it will be possible to obtain an aqueous coating composition with excellent hardness and water resistance of the formed coating film.

The pH is preferably in the range of 7.1 to 8.0 and more preferably in the range of 7.2 to 7.8.

Hydroxyl group- and carboxyl group-containing resin (A)

The hydroxyl group- and carboxyl group-containing resin (A) is not particularly restricted so long as it is a resin comprising a hydroxyl group and a carboxyl group, and specific types of such resins include acrylic resins, polyester resins, polyether resins, polycarbonate resins and polyurethane resins. Particularly preferred for the hydroxyl group- and carboxyl group-containing resin (A) are acrylic resins, polyester resins and polyurethane resins with hydroxyl and carboxyl groups.

Hydroxyl group- and carboxyl group-containing acrylic resin (A1)

The hydroxyl group- and carboxyl group-containing acrylic resin (A1) can be synthesized by copolymerizing a hydroxyl group-containing polymerizable unsaturated monomer (M-1), a carboxyl group-containing polymerizable unsaturated monomer (M-2) and another copolymerizable polymerizable unsaturated monomer (M-3), by a common method.

The hydroxyl group-containing polymerizable unsaturated monomer (M-1) is a compound with one hydroxyl group and one polymerizable unsaturated bond each in the molecule, where the hydroxyl group primarily acts as a functional group for reaction with the crosslinking agent. Specifically preferred for such monomers are monoesters of acrylic acid or methacrylic acid with dihydric alcohols of 2 to 10 carbon atoms, examples of which include 2-hydroxyethyl (meth)acrylate, 2-hydroxypropyl (meth)acrylate and 4-hydroxybutyl (meth)acrylate.

Monoesters of acrylic acid or methacrylic acid and polyhydric alcohols include, in addition to those mentioned above, also compounds having ring-opening polymers such as $\varepsilon$-caprolactone further added to a monoester such as 2-hydroxyethyl (meth)acrylate, examples of which include "PLACCEL FA-1", "PLACCEL FA-2", "PLACCEL FA-3", "PLACCEL FA-4", "PLACCEL FA-5", "PLACCEL FM-1", "PLACCEL FM-2", "PLACCEL FM-3", "PLACCEL FM-4" and "PLACCEL FM-5" (all trade names of Daicel corporation); polyethyleneglycol mono(meth)acrylate, polypropyleneglycol mono(meth)acrylate; 2-hydroxy-3-phenoxypropyl (meth)acrylate, 2-hydroxy-3-butoxypropyl (meth)acrylate; and monohydroxyethyl phthalate (meth)acrylate. Any of these may be used alone or in combinations of two or more.

However, monomers qualifying as "(xvi) polymerizable unsaturated monomers with an ultraviolet absorbing functional group" as mentioned below for the purpose of the invention are to be included within the definition of "another copolymerizable polymerizable unsaturated monomer (M-3)", and are excluded from the "hydroxyl group-containing polymerizable unsaturated monomer (M-1)", even if they are hydroxyl group-containing monomers.

The carboxyl group-containing polymerizable unsaturated monomer (M-2) may be a compound having one or more carboxyl groups and one polymerizable unsaturated bond in the molecule, such as acrylic acid, methacrylic acid, crotonic acid, itaconic acid, maleic acid or maleic anhydride. Any of these may be used alone or in combinations of two or more.

The other copolymerizable polymerizable unsaturated monomer (M-3) is a compound having one polymerizable unsaturated bond in the molecule other than monomer (M-1) and (M-2) mentioned above, specific examples of which include the following.

(i) Alkyl or cycloalkyl (meth)acrylates: For example, methyl (meth)acrylate, ethyl (meth)acrylate, *n*-propyl (meth)acrylate, isopropyl (meth)acrylate, *n*-butyl (meth)acrylate, isobutyl (meth)acrylate, *tert-butyl* (meth)acrylate, *n*-hexyl (meth)acrylate, *n*-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, *t*-butylcyclohexyl (meth)acrylate, cyclododecyl (meth)acrylate, tricyclodecanyl (meth)acrylate and the like.

(ii) Polymerizable unsaturated monomers with isobornyl groups: Monomers such as isobornyl (meth)acrylate.

(iii) Polymerizable unsaturated monomers with adamantyl groups: Adamantyl (meth)acrylate and the like.

(iv) Polymerizable unsaturated monomers with tricyclodecenyl groups: Tricyclodecenyl (meth)acrylate and the like.

(v) Aromatic ring-containing polymerizable unsaturated monomers: Monomers such as benzyl (meth)acrylate, styrene, α-methylstyrene and vinyltoluene.

(vi) Polymerizable unsaturated monomers with alkoxysilyl groups: Vinyltrimethoxysilane, vinyltriethoxysilane, vinyltris(2-methoxyethoxy)silane, γ-(meth)acryloyloxypropyltrimethoxysilane, γ-(meth)acryloyloxypropyltriethoxysilane, and the like.

(vii) Polymerizable unsaturated monomers with fluorinated alkyl groups: Perfluoroalkyl (meth)acrylates such as perfluorobutylethyl (meth)acrylate and perfluorooctylethyl (meth)acrylate, and fluoroolefins.

(viii) Polymerizable unsaturated monomers with photopolymerizable functional groups such as maleimide group.

(ix) Vinyl compounds: N-Vinylpyrrolidone, ethylene, butadiene, chloroprene, vinyl propionate, vinyl acetate and the like.

(x) Nitrogen-containing polymerizable unsaturated monomers: (Meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylenebis(meth)acrylamide, ethylenebis(meth)acrylamide, and glycidyl (meth)acrylate and amine compound addition products and the like.

(xi) Polymerizable unsaturated monomers with two or more polymerizable unsaturated groups in the molecule: Monomers such as allyl (meth)acrylate, ethylene glycol di(meth)acrylate, 1,4-butanediol di(meth)acrylate, neopentyl glycol di(meth)acrylate and 1,6-hexanediol di(meth)acrylate.

(xii) Epoxy group-containing polymerizable unsaturated monomers: Glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether and the like.

(xiii) (Meth)acrylates having polyoxyethylene chains with alkoxy groups at the molecular ends.

(xiv) Polymerizable unsaturated monomers with sulfonic acid groups: Monomers such as 2-acrylamide-2-methylpropanesulfonic acid, 2-sulfoethyl (meth)acrylate, allylsulfonic acid and 4-styrenesulfonic acid; and sodium salts and ammonium salts of these sulfonic acids.

(xv) Polymerizable unsaturated monomers with phosphate groups: Acid phosphooxyethyl (meth)acrylate, acid phosphooxypropyl (meth)acrylate, acid phosphooxypoly(oxyethylene)glycol (meth)acrylate, acid phosphooxypoly(oxypropylene)glycol (meth)acrylate, and the like.

(xvi) Polymerizable unsaturated monomers with ultraviolet absorbing functional groups: Monomers such as 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone and 2-[2-hydroxy-5-[2-(methacryloyloxy)ethyl]phenyl]-2H-benzotriazole.

(xvii) Light-stable polymerizable unsaturated monomers: Monomers such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine and 1-crotonoyl-4-crotonoyloxy-2,2,6,6-tetramethylpiperidine.

(xviii) Polymerizable unsaturated monomers with carbonyl groups: Monomers such as acrolein, diacetoneacrylamide, diacetonemethacrylamide, acetoacetoxyethyl methacrylate, formylstyrol and vinylalkyl ketones with 4 to 7 carbon atoms (for example, vinylmethyl ketone, vinylethyl ketone and vinylbutyl ketone).

(xix) Polymerizable unsaturated monomers with acid anhydride groups: Monomers such as maleic anhydride, itaconic anhydride and citraconic anhydride.

As used herein, "polymerizable unsaturated group" means an unsaturated group that can participate in radical polymerization. Examples of such polymerizable unsaturated groups include vinyl and (meth)acryloyl groups.

Also, as used herein, "(meth)acrylate" refers to acrylate or methacrylate. The term "(meth)acrylic acid" refers to acrylic acid or methacrylic acid. The term "(meth)acryloyl" refers to acryloyl or methacryloyl. The term "(meth)acrylamide" refers to acrylamide or methacrylamide.

The use proportion of the hydroxyl group-containing polymerizable unsaturated monomer (M-1) when producing the hydroxyl group- and carboxyl group-containing acrylic resin (A1) is preferably 1 to 50 mass%, more preferably 2 to 40 mass% and even more preferably 3 to 30 mass%, based on the total amount of the monomer components.

From the viewpoint of the curability, chipping resistance, adhesiveness, hardness and finished appearance of the obtained coating film, the hydroxyl group- and carboxyl group-containing acrylic resin (Al) has a hydroxyl value of preferably 1 to 150 mgKOH/g, more preferably 2 to 120 mgKOH/g and even more preferably 5 to 100 mgKOH/g.

The use proportion of the carboxyl group-containing polymerizable unsaturated monomer (M-2) when producing the hydroxyl group- and carboxyl group-containing acrylic resin (A1) is preferably 1 to 50 mass%, more preferably 2 to 40 mass% and even more preferably 3 to 30 mass%, based on the total amount of the monomer components.

Also, from the viewpoint of the storage stability of the coating material and the water resistance of the obtained coating film, the hydroxyl group- and carboxyl group-containing acrylic resin (A1) has an acid value of preferably 1 to 150 mgKOH/g, more preferably 5 to 100 mgKOH/g and even more preferably 5 to 80 mgKOH/g.

When the aqueous coating composition of the invention contains the hydroxyl group- and carboxyl group-containing acrylic resin (A1), the content of the hydroxyl group- and carboxyl group-containing acrylic resin (A1) is preferably 2 to 70 mass%, more preferably 5 to 50 mass% and even more preferably 10 to 40 mass%, based on the resin solid content of the aqueous coating composition.

The hydroxyl group- and carboxyl group-containing acrylic resin (A1) preferably consists of hydroxyl group- and carboxyl group-containing acrylic resin particles (A1') having a core-shell structure.

Hydroxyl group- and carboxyl group-containing acrylic resin particles (A1') with core-shell structure

According to the invention, "shell section" of the "hydroxyl group- and carboxyl group-containing acrylic resin particles (A1') with a core-shell structure" means the polymer layer present on the outermost layer of the resin particles, "core section" means the polymer layer on the inner layer of the resin particles excluding the shell section, and "with a core-shell structure" means that the structure comprises a core section and a shell section.

The term "hydroxyl group- and carboxyl group-containing acrylic resin particles (A1') with a core-shell structure" may also be referred to simply as "hydroxyl group- and carboxyl group-containing acrylic resin particles (A1')".

The core-shell type structure will usually be a layered structure with the core section totally covered by the shell section, but depending on the mass ratio of the core section and shell section, the amount of monomer of the shell section may be insufficient to form a layered structure. In such cases, it is not necessary for it to be a completely layered structure as described above, but instead it may be a structure with only portions of the core section covered by the shell section.

The hydroxyl group- and carboxyl group-containing acrylic resin particles (A1') will usually be acrylic resin particles composed of a core section which is a copolymer (I) with a polymerizable unsaturated monomer as the copolymerizing component and a shell section which is a copolymer (II) with a polymerizable unsaturated monomer as the copolymerizing component. The polymerizable unsaturated monomer that is used may also be an appropriate combination of polymerizable unsaturated monomers (M-1) to (M-3).

The polymerizable unsaturated monomer can be produced with a copolymer crosslinked structure by using a polymerizable unsaturated monomer having two or more polymerizable unsaturated groups in the molecule. When a polymerizable unsaturated monomer having two or more polymerizable unsaturated groups in the molecule is used, the proportion in which it is used may be appropriately determined according to the degree of crosslinking of the copolymer, but for most purposes it is preferred to be in the range of about 0.1 to 30 mass%, especially about 0.5 to 10 mass% and most especially about 1 to 7 mass%, based on the total amount of the polymerizable unsaturated monomers (M-1) to (M-3).

The hydroxyl group- and carboxyl group-containing acrylic resin particles (A1') can be obtained by carrying out emulsion polymerization of a polymerizable unsaturated monomer mixture to obtain an emulsion of the core section copolymer (I), and then adding a polymerizable unsaturated monomer mixture into the emulsion and carrying out further emulsion polymerization to prepare the shell section copolymer (II).

The emulsion polymerization used to prepare an emulsion of the core section copolymer (I) may be carried out by a conventionally known method. For example, the emulsion polymerization can be carried out by emulsion polymerization of a polymerizable unsaturated monomer mixture using a polymerization initiator in the presence of an emulsifying agent.

The emulsifying agent used is preferably an anionic emulsifier or a nonionic emulsifier.

Examples of anionic emulsifiers include sodium salts and ammonium salts of alkylsulfonic acids, alkylbenzenesulfonic acids and alkylphosphoric acids. Examples of nonionic emulsifiers include polyoxyethylene oleyl ether, polyoxyethylene stearyl ether, polyoxyethylene lauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate and polyoxyethylene sorbitan monolaurate.

There may also be used a polyoxyalkylene group-containing anionic emulsifier having an anionic group and a polyoxyalkylene group such as polyoxyethylene or polyoxypropylene in the molecule; or a reactive anionic emulsifier having an anionic group and a radical polymerizable unsaturated group in the molecule.

The reactive anionic emulsifier may be a sodium salt of a sulfonic acid compound with a radical polymerizable unsaturated group such as allyl, methallyl, (meth)acryloyl, propenyl or butenyl, or an ammonium salt of such a sulfonic acid compound.

The amount of emulsifier used is preferred to be in the range of about 0.1 to 15 mass%, especially about 0.5 to 10 mass% and most especially 1 to 5 mass% based on the total amount of monomer used.

Examples for the polymerization initiator include organic peroxides such as benzoyl peroxide, octanoyl peroxide, lauroyl peroxide, stearoyl peroxide, cumene hydroperoxide, *tert*-butyl peroxide, *tert-butyl* peroxylaurate, *tert*-butylperoxyisopropyl carbonate, *tert-butyl* peroxyacetate and diisopropylbenzene hydroperoxide; azo compounds such as azobisisobutyronitrile, azobis(2,4-dimethylvaleronitrile), azobis(2-methylpropionitrile), azobis(2-methylbutyronitrile), 4,4'-azobis(4-cyanobutanoic acid), dimethylazobis(2-methyl propionate), azobis[2-methyl-N-(2-hydroxyethyl)-propionamide] and azobis{2-methyl-N-[2-(1-hydroxybutyl)]-propionamide}; persulfuric acid salts such as potassium persulfate, ammonium persulfate and sodium persulfate, and any desired combinations of the foregoing. These polymerization initiators may be used either alone or in combinations of two or more. If necessary, a reducing agent such as a sugar, sodium formaldehyde sulfoxylate or an iron complex may be used with the polymerization initiator, as a redox initiator.

Generally, the amount of the polymerization initiator used is preferred to be in the range of about 0.1 to 5 mass% and especially about 0.2 to 3 mass%, based on the total mass of all of the monomers used. The method of adding the polymerization initiator is not particularly restricted, and it may be appropriately selected according to the type and amount used. For example, the polymerization initiator may be added to a monomer mixture or aqueous medium beforehand, or may be added all at once, or added dropwise, during polymerization.

The hydroxyl group- and carboxyl group-containing acrylic resin particles (A1') can be obtained by adding a polymerizable unsaturated monomer mixture to the obtained emulsion of the core section copolymer (I), and conducting further polymerization to form the shell section copolymer (II).

The monomer mixture that is to form the shell section copolymer (II) may appropriately include components such as polymerization initiators, chain transfer agents, reducing agents, emulsifiers and the like, as necessary. Moreover, although the monomer mixture may be added dropwise as is, preferably it is added dropwise as a monomer emulsion obtained by dispersing the monomer mixture in an aqueous medium. The particle diameter of the monomer emulsion in this case is not particularly restricted.

The polymerization method for the monomer mixture that is to form the shell section copolymer (II) may be, for example, a method of adding the monomer mixture or its emulsion to the reaction system either all at once or in a slow dropwise fashion to the emulsion of the core section copolymer (I), and heating to a suitable temperature while stirring.

The hydroxyl group- and carboxyl group-containing acrylic resin particles (A1') obtained in this manner have a multilayered structure with the copolymer (I) as the core section and the copolymer (II) as the shell section.

When the aqueous coating composition of the invention comprises the hydroxyl group- and carboxyl group-containing acrylic resin particles (A1'), the content of the hydroxyl group- and carboxyl group-containing acrylic resin particles (A1') is preferably 2 to 70 mass%, more preferably 5 to 50 mass% and even more preferably 10 to 40 mass%, based on the resin solid content of the aqueous coating composition.

The hydroxyl group- and carboxyl group-containing acrylic resin particles (A1') can be obtained by including an addition step of supplying a polymerizable unsaturated monomer (one or a mixture of two or more) that forms another resin layer and conducting emulsion polymerization, between the step of obtaining the core section copolymer (I) and the step of obtaining the shell section copolymer (II). The additional layer preferably forms a gradient polymer layer so that hydroxyl group- and carboxyl group-containing acrylic resin particles (A1") with core-shell structure including a gradient polymer layer are obtained.

Hydroxyl group- and carboxyl group-containing acrylic resin particles (A1") with core-shell structure including gradient polymer layer

The gradient polymer layer of the "hydroxyl group- and carboxyl group-containing acrylic resin particles (A1") with a core-shell structure that includes a gradient polymer layer" according to the invention is a polymer layer having a layered structure with a continuous varying composition (a compositional gradient).

More specifically, it means a polymer layer having a composition gradient for the monomers (monomer mixture) in which the composition continuously varies from monomer A (monomer mixture A) to monomer B (monomer mixture B).

The term "hydroxyl group- and carboxyl group-containing acrylic resin particles (A1") with a core-shell structure that includes a gradient polymer layer" may also be referred to simply as "hydroxyl group- and carboxyl group-containing acrylic resin particles (A1")".

The gradient polymer layer can generally be obtained by the publicly known polymerization method known as power feed polymerization. Specifically, when monomer A (monomer mixture A) and monomer B (monomer mixture B) of two different types are subjected to polymerization reaction, the monomer B (monomer mixture B) is added dropwise to a vessel housing monomer A (monomer mixture A) while introducing monomer A (monomer mixture A) into the reactor for polymerization reaction, to obtain a gradient polymer layer.

In power feed polymerization, it is possible to obtain a gradient polymer layer having the desired composition gradient by adjusting the synthesis conditions (such as setting the timing for initiating mixture of monomer A (monomer mixture A) and monomer B (monomer mixture B), and the speed of dropping monomer B (monomer mixture B) into the vessel housing monomer A (monomer mixture A), as well as the speed for introducing monomer A (monomer mixture A) into the reactor).

From the viewpoint of the water resistance of the obtained coating film, the proportion of the gradient polymer layer in the hydroxyl group- and carboxyl group-containing acrylic resin particles (A1") is preferably about 20 to 80 mass%, especially about 25 to 75 mass% and most especially about 30 to 70 mass%, with respect to the total amount of all of the copolymerizing components of the hydroxyl group- and carboxyl group-containing acrylic resin particles (A1").

From the viewpoint of the curability, chipping resistance, adhesiveness and finished appearance of the obtained coating film, the hydroxyl group- and carboxyl group-containing acrylic resin particles (A1") have a hydroxyl value of preferably 1 to 150 mgKOH/g, more preferably 2 to 120 mgKOH/g and even more preferably 5 to 100 mgKOH/g.

From the viewpoint of the water resistance and chipping resistance of the obtained coating film, the core section of the hydroxyl group- and carboxyl group-containing acrylic resin particles (A1") has a hydroxyl value of preferably 0 to 150 mgKOH/g, more preferably 5 to 120 mgKOH/g and even more preferably 10 to 100 mgKOH/g.

From the viewpoint of the water resistance and chipping resistance of the obtained coating film, the shell section of the hydroxyl group- and carboxyl group-containing acrylic resin particles (A1") has a hydroxyl value of preferably 0 to 150 mgKOH/g, more preferably 2 to 120 mgKOH/g and even more preferably 5 to 100 mgKOH/g.

From the viewpoint of the storage stability of the coating material and the water resistance of the obtained coating film, the hydroxyl group- and carboxyl group-containing acrylic resin particles (A1") have an acid value of preferably 1 to 80 mgKOH/g, more preferably 5 to 50 mgKOH/g and even more preferably 5 to 30 mgKOH/g.

From the viewpoint of production stability and storage stability of the coating material, the core section of the hydroxyl group- and carboxyl group-containing acrylic resin particles (A1") has an acid value of preferably 0 to 50 mgKOH/g, more preferably 0 to 30 mgKOH/g and even more preferably 0 to 10 mgKOH/g.

From the viewpoint of storage stability of the coating material and water resistance of the obtained coating film, the shell section of the hydroxyl group- and carboxyl group-containing acrylic resin particles (A1") has an acid value of preferably 1 to 100 mgKOH/g, more preferably 5 to 80 mgKOH/g and even more preferably 10 to 50 mgKOH/g.

From the viewpoint of water resistance and chipping resistance of the obtained coating film, the hydroxyl group- and carboxyl group-containing acrylic resin particles (A1") have a glass transition temperature of preferably -20 to 100°C, more preferably 0 to 100°C and even more preferably 20 to 100°C.

From the viewpoint of water resistance and chipping resistance of the obtained coating film, the core section of the hydroxyl group- and carboxyl group-containing acrylic resin particles (A1") has a glass transition temperature of preferably -50 to 50°C, more preferably -30 to 50°C and even more preferably 0 to 50°C.

From the viewpoint of water resistance of the obtained coating film, the shell section of the hydroxyl group- and carboxyl group-containing acrylic resin particles (A1") has a glass transition temperature of preferably 0 to 120°C, more preferably 20 to 100°C and even more preferably 30 to 100°C.

When the aqueous coating composition of the invention comprises the hydroxyl group- and carboxyl group-containing acrylic resin particles (A1"), the content of the hydroxyl group- and carboxyl group-containing acrylic resin particles (A1") is preferably 2 to 70 mass%, more preferably 5 to 50 mass% and even more preferably 10 to 40 mass%, based on the resin solid content of the aqueous coating composition.

Hydroxyl group- and carboxyl group-containing polyester resin (A2)

The hydroxyl group- and carboxyl group-containing polyester resin (A2) can be synthesized by esterification reaction between a polybasic acid and a polyhydric alcohol by a known method according to an ordinary protocol.

A polybasic acid is a compound having two or more carboxyl groups in the molecule, examples of which include phthalic acid, isophthalic acid, terephthalic acid, succinic acid, adipic acid, azelaic acid, sebacic acid, tetrahydrophthalic acid, hexahydrophthalic acid, maleic acid, fumaric acid, itaconic acid, trimellitic acid and pyromellitic acid, and their anhydrides. Polyhydric alcohols are compounds with two or more hydroxyl groups in the molecule, examples of which include diols such as ethylene glycol, propylene glycol, 1,3-propanediol, 1,4-butanediol, 1,5-pentanediol, 1,6-hexanediol, 2,2-diethyl-1,3-propanediol, neopentyl glycol, 1,9-nonanediol, 1,4-cyclohexanediol, hydroxypivalic acid neopentyl glycol ester, 2-butyl-2-ethyl-1,3-propanediol, 3-methyl-1,5-pentanediol, 2,2,4-trimethylpentanediol and hydrogenated bisphenol A, trihydric and greater polyol components such as trimethylolpropane, trimethylolethane, glycerin and pentaerythritol, and hydroxycarboxylic acids such as 2,2-dimethylolpropionic acid, 2,2-dimethylolbutanoic acid, 2,2-dimethylolpentanoic acid, 2,2-dimethylolhexanoic acid and 2,2-dimethyloloctanoic acid.

In addition, $\alpha$-olefin epoxides such as propylene oxide and butylene oxide, and monoepoxy compounds such as CARDURA E10 (trade name of Hexion Specialty Chemicals, glycidyl ester of synthetic highly-branched saturated fatty acid), may be reacted with acids, and the resulting compounds introduced into a polyester resin.

Introduction of a carboxyl group into a polyester resin may be by a method of esterification reaction with a polybasic acid and polyhydric alcohol followed by further reaction with a polybasic acid such as trimellitic acid or trimellitic anhydride or their anhydride, or a method of adding an acid anhydride to a hydroxyl group-containing polyester for half-esterification.

The hydroxyl group- and carboxyl group-containing polyester resin (A2) may be a fatty acid-modified polyester resin obtained by modification with a (semi) drying oil fatty acid such as linseed oil fatty acid, coconut oil fatty acid, safflower oil fatty acid, soybean oil fatty acid, sesame oil fatty acid, perilla oil fatty acid, hemp oil fatty acid, tall oil fatty acid or dehydrated castor oil fatty acid. The degree of modification by these fatty acids is generally suitable at up to 30 mass% in terms of oil length. The hydroxyl group- and carboxyl group-containing polyester resin (A2) may also be one that has been partially reacted with a monobasic acid such as benzoic acid.

The hydroxyl group- and carboxyl group-containing polyester resin (A2) may also be modified with a fatty acid, monoepoxy compound, polyisocyanate compound or acrylic resin either during or after preparation of the resin.

Examples of fatty acids include coconut fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid and safflower oil fatty acid. An example of a suitable monoepoxy compound to be used is "CARDURA E10P" (trade name of Hexion, glycidyl ester of synthetic highly-branched saturated fatty acid).

Examples for the polyisocyanate compound include organic polyisocyanates, such as aliphatic diisocyanate compounds such as lysine diisocyanate, hexamethylene diisocyanate and trimethylhexane diisocyanate; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylenebis(cyclohexyl isocyanate) and 1,3-(isocyanatomethyl)cyclohexane; aromatic diisocyanate compounds such as tolylene diisocyanate, xylylene diisocyanate and diphenylmethane diisocyanate; and trivalent and greater polyisocyanates such as lysine triisocyanate; as well as addition products of these organic polyisocyanates with polyhydric alcohols, low molecular weight polyester resins, water or the like; cyclized polymers formed between these organic polyisocyanates (for example, isocyanurates) and biuret-type addition products. These polyisocyanate compounds may be used alone or in mixtures of two or more.

The method used to modify the hydroxyl group- and carboxyl group-containing polyester resin (A2) with an acrylic resin may be a known method, and for example, it may be a method of polymerizing a mixture of a polymerizable unsaturated group-containing polyester resin and a polymerizable unsaturated monomer, or a method of reacting a hydroxyl group- and carboxyl group-containing polyester resin with an acrylic resin.

The hydroxyl group- and carboxyl group-containing polyester resin (A2) has a hydroxyl value of preferably 1 to 250 mgKOH/g, more preferably 2 to 200 mgKOH/g and even more preferably 5 to 200 mgKOH/g.

The hydroxyl group- and carboxyl group-containing polyester resin (A2) has an acid value of preferably 1 to 150 mgKOH/g, more preferably 2 to 100 mgKOH/g and even more preferably 2 to 50 mgKOH/g.

The weight-average molecular weight of the hydroxyl group- and carboxyl group-containing polyester resin (A2) is preferably 3,000 to 100,000, more preferably 4,000 to 50,000 and even more preferably 5,000 to 30,000.

As used herein, the average molecular weight is the value calculated from a chromatogram measured by gel permeation chromatography based on the molecular weight of standard polystyrene. An "HLC8120GPC" apparatus (product of Tosoh Corp.) was used for the gel permeation chromatography. Four columns were used, namely "TSKgel G-4000HXL", "TSKgel G-3000HXL", "TSKgel G-2500HXL" and "TSKgel G-2000HXL" (all trade names of Tosoh Corp.), with the following conditions: mobile phase: tetrahydrofuran, measuring temperature: 40°C, flow rate: 1 mL/min, detector: RI.

When the aqueous coating composition of the invention contains the hydroxyl group- and carboxyl group-containing polyester resin (A2), the content of the hydroxyl group- and carboxyl group-containing polyester resin (A2) is preferably 2 to 70 mass%, more preferably 5 to 50 mass% and even more preferably 5 to 40 mass%, based on the resin solid content of the aqueous coating composition.

Hydroxyl group- and carboxyl group-containing polyurethane resin (A3)

The hydroxyl group- and carboxyl group-containing polyurethane resin (A3) can be obtained by reacting a polyol and a polyisocyanate compound, for example, by a common method. After the reaction, chain extension may be carried out in the presence of a chain extender, as a low molecular weight compound having at least 2 active hydrogens in the molecule, such as a diol or diamine. Either during or after preparation of the resin, it may be modified with an acrylic resin or the like.

Examples of polyols without carboxyl groups include low-molecular-weight compounds, including dihydric alcohols such as ethylene glycol, diethylene glycol, propylene glycol, butylene glycol and hexamethylene glycol; and trihydric alcohols such as trimethylolpropane, glycerin and pentaerythritol. High-molecular-weight compounds include polyether polyols, polyester polyols, acrylic polyols and epoxy polyols. Polyether polyols include polyethylene glycol, polypropylene glycol and polytetramethylene glycol. Polyester polyols include polycondensates of alcohols such as the aforementioned dihydric alcohols, dipropylene glycol, 1,4-butanediol, 1,6-hexanediol or neopentyl glycol with dibasic acids such as adipic acid, azelaic acid or sebacic acid; lactone-based ring-opening polymer polyols such as polycaprolactone, and polycarbonate polyols.

Examples of carboxyl group-containing polyols include 2,2-dimethylolpropionic acid and 2,2-dimethylolbutanoic acid, with 2,2-dimethylolpropionic acid being particularly preferred. When these are used, a small amount of a solvent such as N-methylpyrrolidone may also be used to help speed the reaction.

Examples of polyisocyanates to be reacted with polyols include aliphatic polyisocyanates such as hexamethylene diisocyanate, trimethylhexamethylene diisocyanate, dimer acid diisocyanate and lysine diisocyanate; as well as biuret type adducts and isocyanurate ring adducts of these polyisocyanates; alicyclic diisocyanates such as isophorone diisocyanate, 4,4'-methylenebis(cyclohexylisocyanate), methylcyclohexane-2,4- (or -2,6-)diisocyanate, 1,3- (or 1,4-)di(isocyanatomethyl)cyclohexane, 1,4-cyclohexane diisocyanate, 1,3-cyclopentane diisocyanate and 1,2-cyclohexane diisocyanate, as well as biuret type adducts and isocyanurate ring adducts of these polyisocyanates; aromatic diisocyanate compounds such as xylylene diisocyanate, *meta*-xylylene diisocyanate, tetramethylxylylene diisocyanate, tolylene diisocyanate, 4,4'-diphenylmethane diisocyanate, 1,5-naphthalene diisocyanate, 1,4-naphthalene diisocyanate, 4,4-toluidine diisocyanate, 4,4'-diphenyl ether diisocyanate, (m- or *p*-)phenylene diisocyanate, 4,4'-biphenylene diisocyanate, 3,3'-dimethyl-4,4'-biphenylene diisocyanate, bis(4-isocyanatophenyl)sulfone and isopropylidene bis(4-phenylisocyanate), as well as biuret type adducts and isocyanurate ring adducts of these polyisocyanates; and polyisocyanates having 3 or more isocyanate groups in the molecule, such as triphenylmethane-4,4',4"-triisocyanate, 1,3,5-triisocyanatobenzene, 2,4,6-triisocyanatotoluene and 4,4'-dimethyldiphenylmethane-2,2',5,5'-tetraisocyanate, as well as biuret type adducts and isocyanurate ring adducts of these polyisocyanates.

Examples of diols as chain extenders include ethylene glycol, 1,4-butanediol, 1,5-pentanediol, 3-methyl-1,5-pentanediol and cyclohexanediol, and examples of diamines include ethylenediamine, propylenediamine, xylylenediamine and N-(2-hydroxyethyl)ethylenediamine.

The hydroxyl group- and carboxyl group-containing polyurethane resin (A3) has a hydroxyl value of preferably 1 to 250 mgKOH/g, more preferably 2 to 200 mgKOH/g and even more preferably 5 to 200 mgKOH/g.

From the viewpoint of production stability and water resistance of the obtained coating film, the hydroxyl group- and carboxyl group-containing polyurethane resin (A3) has an acid value of preferably 1 to 100 mgKOH/g, more preferably 2 to 50 mgKOH/g and even more preferably 2 to 30 mgKOH/g.

The weight-average molecular weight of the hydroxyl group- and carboxyl group-containing polyurethane resin (A3) is preferably 3,000 or higher, more preferably 5,000 or higher and even more preferably 10,000 or higher.

When the aqueous coating composition of the invention comprises the hydroxyl group- and carboxyl group-containing polyurethane resin (A3), the content of the hydroxyl group- and carboxyl group-containing polyurethane resin (A3) is preferably 2 to 70 mass%, more preferably 5 to 50 mass% and even more preferably 10 to 40 mass%, based on the resin solid content of the aqueous coating composition.

Blocked polyisocyanate compound (B)

The blocked polyisocyanate compound (B) is a compound wherein the isocyanate groups of the polyisocyanate compound (b1) are blocked with a blocking agent (b2).

Polyisocyanate compound (b1)

The polyisocyanate compound (b1) is a compound with at least two isocyanate groups in the molecule, and examples include aliphatic polyisocyanates, alicyclic polyisocyanates, araliphatic polyisocyanates, aromatic polyisocyanates, and their derivatives, as well as any desired combinations of the foregoing.

Examples of aliphatic polyisocyanates include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate and methyl 2,6-diisocyanatohexanoate (common name: lysine diisocyanate); and aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane and 2,5,7-trimethyl-1,8-diisocyanato-5-isocyanatomethyloctane.

Examples of alicyclic polyisocyanates include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, methylene bis(4,1-cyclohexanediyl)diisocyanate (common name: hydrogenated MDI) and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane and 6-(2-isocyanatoethyl)-2-isocyanatomethyl-2-(3-isocyanatopropyl)-bicyclo(2.2.1)heptane.

Examples of araliphatic polyisocyanates include araliphatic diisocyanates such as methylenebis(4,1-phenylene)diisocyanate (common name: MDI), 1,3- or 1,4-xylylene diisocyanate or mixtures thereof, $\omega,\omega'$-diisocyanato-1,4-diethylbenzene and 1,3- or 1,4-bis(1-isocyanato-1-methylethyl)benzene (common name: tetramethylxylylene diisocyanate) or mixtures thereof; and araliphatic triisocyanates such as 1,3,5-triisocyanatomethylbenzene.

Examples of aromatic polyisocyanates include aromatic diisocyanates such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI), or mixtures thereof, 4,4'-toluidine diisocyanate and 4,4'-diphenyl ether diisocyanate; aromatic triisocyanates such as triphenylmethane-4,4',4"-triisocyanate, 1,3,5-triisocyanatobenzene and 2,4,6-triisocyanatotoluene; and aromatic tetraisocyanates such as 4,4'-diphenylmethane-2,2',5,5'-tetraisocyanate.

Examples of the aforementioned derivatives include the aforementioned polyisocyanate dimers, trimers, biurets, allophanates, urethodiones, urethoimines, isocyanurates, oxadiazinetriones and the like, as well as polymethylenepolyphenyl polyisocyanate (crude MDI, polymeric MDI) and crude TDI.

From the viewpoint of helping to prevent yellowing of the blocked polyisocyanate compound (B) during heating, the polyisocyanate compound (b1) is preferably an aliphatic diisocyanate, an alicyclic diisocyanate or a derivative thereof, and from the viewpoint of flexibility of the coating film that is to be formed, an aliphatic diisocyanate or its derivative is more preferred.

The polyisocyanate compound (b1) includes prepolymers produced by reacting aliphatic polyisocyanates, alicyclic polyisocyanates, araliphatic polyisocyanates, aromatic polyisocyanates, and their derivatives, as well as any desired combinations of the foregoing, with compounds that can react with such polyisocyanates, under conditions with an excess of isocyanate groups. Examples of compounds that can react with the aforementioned polyisocyanates include compounds with active hydrogen groups such as hydroxyl and amino groups, and specific examples include polyhydric alcohols, low molecular weight polyester resins, amines and water.

The polyisocyanate compound (b1) also includes polymers of isocyanate group-containing polymerizable unsaturated monomers, or copolymers of such isocyanate group-containing polymerizable unsaturated monomers and polymerizable unsaturated monomers other than the isocyanate group-containing polymerizable unsaturated monomers.

From the viewpoint of reactivity of the obtained blocked polyisocyanate compound (B) and compatibility between the blocked polyisocyanate compound (B) and the other coating material components, the polyisocyanate compound (b1) has a number-average molecular weight in the range of preferably 300 to 20,000, more preferably 400 to 8,000 and even more preferably 500 to 2,000.

The polyisocyanate compound (b1) also preferably has a mean number of isocyanate functional groups in the molecule in the range of 2 to 100, from the viewpoint of reactivity of the blocked polyisocyanate compound (B) that is to be obtained and compatibility between the blocked polyisocyanate compound (B) and the other coating material components. The mean number of isocyanate functional groups is more preferably 3 or greater from the viewpoint of increasing the reactivity of the blocked polyisocyanate compound (B). The mean number of isocyanate functional groups is also preferably 20 or less from the viewpoint of preventing gelation during production of the blocked polyisocyanate compound (B).

Blocking agent (b2)

Examples for the blocking agent (b2) used to block the isocyanate groups in the polyisocyanate compound (b1) include active methylene-based, alcohol-based, phenol-based, oxime-based, amine-based, acid amide-based, imidazole-based, pyridine-based and mercaptane-based blocking agents, and such blocking agents may be used alone or in combinations of two or more.

From the viewpoint of low-temperature curability, at least a portion of the blocking agent (b2) is preferably an active methylene-based blocking agent, and more preferably the blocking agent is a methylene-based blocking agent.

Examples of active methylene-based blocking agents include malonic acid diesters such as dimethyl malonate, diethyl malonate, di-*n*-propyl malonate, diisopropyl malonate, di-n-butyl malonate, diisobutyl malonate, di-sec-butyl malonate, di-*tert*-butyl malonate, di-*n*-pentyl malonate, di-*n*-hexyl malonate, di(2-ethylhexyl) malonate, methyl isopropyl malonate, ethyl isopropyl malonate, methyl n-butyl malonate, ethyl *n*-butyl malonate, methyl isobutyl malonate, ethyl isobutyl malonate, methyl sec-butyl malonate, ethyl sec-butyl malonate, diphenyl malonate and dibenzyl malonate, acetoacetic acid esters such as methyl acetoacetate, ethyl acetoacetate, n-propyl acetoacetate, isopropyl acetoacetate, *n*-butyl acetoacetate, isobutyl acetoacetate, *sec*-butyl acetoacetate, *tert-butyl* acetoacetate, n-pentyl acetoacetate, *n*-hexyl acetoacetate, 2-ethylhexyl acetoacetate, phenyl acetoacetate and benzyl acetoacetate, isobutyrylacetic acid esters such as methyl isobutyrylacetate, ethyl isobutyrylacetate, *n*-propyl isobutyrylacetate, isopropyl isobutyrylacetate, *n*-butyl isobutyrylacetate, isobutyl isobutyrylacetate, sec-butyl isobutyrylacetate, *tert-butyl* isobutyrylacetate, *n*-pentyl isobutyrylacetate, n-hexyl isobutyrylacetate, 2-ethylhexyl isobutyrylacetate, phenyl isobutyrylacetate and benzyl isobutyrylacetate, and any desired combinations of the foregoing.

From the viewpoint of smoothness and distinctness of the coating film formed by the aqueous coating composition of the invention, the active methylene-based blocking agent is preferably one or more selected from the group consisting of dimethyl malonate, diethyl malonate, diisopropyl malonate, methyl acetoacetate, ethyl acetoacetate, methyl isobutyrylacetate and ethyl isobutyrylacetate.

The blocking reaction of isocyanate groups in the polyisocyanate compound (b1) may include a reaction catalyst if desired. Examples for the reaction catalyst include basic compounds such as metal hydroxides, metal alkoxides, metal carboxylates, metal acetylacetonates, onium salt hydroxides, onium carboxylates, active methylene compound metal salts, active methylene compound onium salts, aminosilanes, amines and phosphines.

From the viewpoint of low-temperature curability of the aqueous coating composition of the invention and water resistance of the formed coating film, the blocked polyisocyanate compound (B) preferably includes a structure derived from a spacer (b3) having at least 2 isocyanate reactive functional groups.

Spacer (b3)

The spacer (b3) is a compound having at least 2 isocyanate reactive functional groups.

The functional groups are not particularly restricted so long as they are functional groups that are reactive with isocyanate groups. Examples of isocyanate reactive functional groups include hydroxyl, amino, carboxyl and thiol groups, among which hydroxyl and amino groups are preferred, and hydroxyl groups are most preferred.

The spacer (b3) is therefore preferably a compound with at least 2 hydroxyl groups or a compound with at least 2 amino groups, and most preferably a compound with at least 2 hydroxyl groups.

Examples of compounds with at least 2 hydroxyl groups include low-molecular-weight compounds, including dihydric alcohols such as ethylene glycol, diethylene glycol, propylene glycol, butylene glycol and hexamethylene glycol; and trihydric alcohols such as trimethylolpropane, glycerin and pentaerythritol, and high-molecular-weight compounds, such as polyether polyols, polyester polyols, acryl polyols and epoxy polyols. A polyether polyol is preferred from the viewpoint of water resistance and chipping resistance of the obtained coating film.

A commercial product may be used as the polyether polyol. Examples of commercial products include "PEG#200", "PEG#300", "PEG#400", "PEG#600", "PEG#1000", "PEG#1500", "PEG#1540", "PEG#2000", "PEG#4000" and "PEG#6000" (all polyethylene glycols by NOF Corp.), "SANNIX GP250", "SANNIX GP400", "SANNIX GP600", "SANNIX GP1000", "SANNIX GP1500", "SANNIX GP3000" and "SANNIX GP4000" (all polyoxypropylene glyceryl ethers by Sanyo Chemical Industries, Ltd.), "SANNIX PP200", "SANNIX PP400", "SANNIX PP600", "SANNIX PP950", "SANNIX PP1000", "SANNIX PP1200", "SANNIX PP2000", "SANNIX PP3000" and "SANNIX PP4000" (all polyoxypropylene glycols by Sanyo Chemical Industries, Ltd.), and "PTMG250", "PTMG650", "PTMG1000", "PTMG2000", "PTMG3000" and "PTMG4000" (all polyoxytetramethylene glycols by Mitsubishi Chemical Corp.).

Polyetheramines are examples of compounds with at least 2 amino groups.

A commercial product may be used as the polyetheramine. Examples of commercial products include "JEFFAMINE D-400", "JEFFAMINE D-2000", "JEFFAMINE D-4000", "JEFFAMINE ED-600", "JEFFAMINE ED-900", "JEFFAMINE ED-2003", "ELASTAMINE RT-1000", "JEFFAMINE T-403", "JEFFAMINE T-3000" and "JEFFAMINE T-5000", by Huntsman Co.

From the viewpoint of low-temperature curability of the aqueous coating composition of the invention and hardness, chipping resistance and water resistance of the formed coating film, the molecular weight of the spacer (b3) is preferably in the range of 500 to 6,000, more preferably in the range of 800 to 5,000 and even more preferably in the range of 1,000 to 4,000.

The number of functional groups in the spacer (b3) is preferably 2 to 3 and more preferably 2 from the viewpoint of storage stability of the aqueous coating composition of the invention.

Some of the isocyanate groups of the polyisocyanate compound (b1) may be reacted with the spacer (b3) to form a polyisocyanate compound (b1) that includes a structure derived from the spacer (b3). From the viewpoint of storage stability of the aqueous coating composition of the invention, hardness and water resistance of the formed coating film and production stability of the blocked polyisocyanate compound (B), the ratio of the polyisocyanate compound (b1) and the spacer (b3) is preferably in the range of 0.03 to 0.6 mol as the number of moles of active hydrogen in the spacer (b3) based on 1 mol of isocyanate groups in the polyisocyanate compound (b1). Blocking of the polyisocyanate compound (b1) that includes a structure derived from the spacer (b3) can form a blocked polyisocyanate compound (B) that includes a structure derived from the spacer (b3).

From the viewpoint of storage stability of the aqueous coating composition of the invention, the blocked polyisocyanate compound (B) may include a structure derived from a hydrophilic group-containing compound (b4) with one isocyanate reactive functional group.

Hydrophilic group-containing compound (b4)

The hydrophilic group-containing compound (b4) has one isocyanate-reactive functional group. The hydrophilic group-containing compound (b4) may be a nonionic hydrophilic group-containing compound, an anionic hydrophilic group-containing compound, a cationic hydrophilic group-containing compound, or any desired combination of the same. The hydrophilic group-containing compound (b4) is preferably a nonionic hydrophilic group-containing compound, because the blocking reaction of the isocyanate groups in the polyisocyanate compound (b1) by the blocking agent (b2) is less likely to be inhibited.

Compounds with polyoxyalkylene groups are examples of nonionic hydrophilic group-containing compounds. Examples of polyoxyalkylene groups include polyoxyethylene, polyoxypropylene and polyoxyethyleneoxypropylene. The nonionic hydrophilic group-containing compound preferably has a polyoxyethylene group, from the viewpoint of storage stability of the aqueous coating composition of the invention.

The compound with a polyoxyethylene group preferably has 3 or more, preferably 5 to 100 and more preferably 8 to 45 continuous polyoxyethylene groups, i.e. a polyoxyethylene block, from the viewpoint of storage stability of the aqueous coating composition of the invention and water resistance of the formed coating film.

The compound with a polyoxyethylene group may also comprise oxyalkylene groups other than oxyethylene groups, in addition to the polyoxyethylene blocks. Examples of oxyalkylene groups other than the oxyethylene groups include oxypropylene, oxybutylene and oxystyrene groups.

The molar ratio of oxyethylene groups among the oxyalkylene groups in the compound with a polyoxyethylene group is preferably in the range of 20 to 100 mol% and more preferably in the range of 50 to 100 mol%, from the viewpoint of storage stability of the aqueous coating composition of the invention. If the molar ratio of oxyethylene groups among the oxyalkylene groups is 20 mol% or greater, the hydrophilicity imparted will be adequate and the storage stability of the aqueous coating composition of the invention will be satisfactory.

The nonionic hydrophilic group-containing compound also preferably has a number-average molecular weight in the range of 200 to 2,000, from the viewpoint of storage stability of the aqueous coating composition of the invention and water resistance of the formed coating film. The number-average molecular weight is preferably 300 or greater and even more preferably 400 or greater from the viewpoint of storage stability of the aqueous coating composition of the invention. The number-average molecular weight is also more preferably no greater than 1,500 and even more preferably no greater than 1,200 from the viewpoint of water resistance of the coating film to be formed by the aqueous coating composition of the invention.

Examples of nonionic hydrophilic group-containing compounds include polyethyleneglycol monoalkyl ethers (alternate name: ω-alkoxypolyoxyethylenes) such as polyethyleneglycol monomethyl ether and polyethyleneglycol monoethyl ether; polypropyleneglycol monoalkyl ethers (alternate name: ω-alkoxypolyoxypropylenes) such as polypropyleneglycol monomethyl ether and polypropyleneglycol monoethyl ether; ω-alkoxypolyoxyethylene(oxypropylene)s such as ω-methoxypolyoxyethylene(oxypropylene) and ω-ethoxypolyoxyethylene(oxypropylene); and polyethylene glycol(propylene glycol) monoalkyl ethers such as polyethylene glycol (propylene glycol) monomethyl ether and polyethylene glycol (propylene glycol) monoethyl ether; as well as any desired combinations of the foregoing.

Preferred for the nonionic hydrophilic group-containing compound are polyethyleneglycol monomethyl ether and polyethyleneglycol monoethyl ether, with polyethyleneglycol monomethyl ether being more preferred.

As used herein, "polyethylene glycol(propylene glycol)" means a copolymer of ethylene glycol and propylene glycol, and it includes block copolymers and random copolymers.

Examples of commercial products of polyethyleneglycol monomethyl ether include "UNIOX M-400", "UNIOX M-550", "UNIOX M-1000" and "UNIOX M-2000" by NOF Corp.

Some of the isocyanate groups of the polyisocyanate compound (b1) may be reacted with the hydrophilic group-containing compound (b4) to form a polyisocyanate compound (b1) that includes a structure derived from the hydrophilic group-containing compound (b4). From the viewpoint of storage stability of the aqueous coating composition of the invention and adhesion, smoothness, distinctness, water resistance and chipping resistance of the formed coating film, the ratio of the polyisocyanate compound (b1) and the hydrophilic group-containing compound (b4) is preferably in the range of 0.03 to 0.6 mol as the number of moles of active hydrogen in the hydrophilic group-containing compound (b4) based on 1 mol of isocyanate groups in the polyisocyanate compound (b1). Blocking of the polyisocyanate compound (b1) that includes a structure derived from the hydrophilic group-containing compound (b4) can form a blocked polyisocyanate compound (B) that includes a structure derived from the hydrophilic group-containing compound (b4).

When reacting the isocyanate groups in the polyisocyanate compound (b1) and the blocking agent (b2) with the spacer (b3) and/or hydrophilic group-containing compound (b4), the order of reaction is not particularly restricted.

Specifically, there may be mentioned a method of reacting the spacer (b3) and/or hydrophilic group-containing compound (b4) with some of the isocyanate groups in the polyisocyanate compound (b1) and then blocking the remaining isocyanate groups with the blocking agent (b2), a method of blocking some of the isocyanate groups in the polyisocyanate compound (b1) with the blocking agent (b2) and then reacting the spacer (b3) and/or hydrophilic group-containing compound (b4) with the remaining isocyanate groups, and a method of simultaneously reacting the blocking agent (b2), the spacer (b3) and/or the hydrophilic group-containing compound (b4) with the isocyanate groups with polyisocyanate compound (b1).

The weight-average molecular weight of the blocked polyisocyanate compound (B) is preferably in the range of 20,000 to 200,000, more preferably in the range of 25,000 to 150,000 and even more preferably in the range of 30,000 to 120,000, from the viewpoint of production stability and of water resistance and hardness of the formed coating film.

The content of the blocked polyisocyanate compound (B) is preferably 2 to 70 mass%, more preferably 5 to 50 mass% and even more preferably 10 to 40 mass%, based on the resin solid content of the aqueous coating composition.

Phosphate group-containing compound (C)

Examples for the phosphate group-containing compound (C) include phosphoric acid; monoalkylphosphoric acids such as mono-*n*-propylphosphoric acid, monoisopropylphosphoric acid, mono-n-butylphosphoric acid, monoisobutylphosphoric acid, mono-tert-butylphosphoric acid, monooctylphosphoric acid and monodecylphosphoric acid; dialkylphosphoric acids such as di-n-propylphosphoric acid, diisopropylphosphoric acid, di-*n*-butylphosphoric acid, diisobutylphosphoric acid, di-tert-butylphosphoric acid, dioctylphosphoric acid and didecylphosphoric acid; monoalkylphosphorous acids such as mono-n-propylphosphorous acid, monoisopropylphosphorous acid, mono-*n*-butylphosphorous acid, monoisobutylphosphorous acid, mono-*tert*-butylphosphorous acid, monooctylphosphorous acid and monodecylphosphorous acid; dialkylphosphorous acids such as di-*n*-propylphosphorous acid, diisopropylphosphorous acid, di-*n*-butylphosphorous acid, diisobutylphosphorous acid, di-tert-butylphosphorous acid, dioctylphosphorous acid and didecylphosphorous acid; and alkyl ether phosphoric acids, polyoxyethylene alkyl ether phosphoric acids, and the phosphate group-containing resin (C1). Any of these may be used alone or in combinations of two or more.

The phosphate group-containing compound (C) is preferably a phosphate group-containing resin (C1) from the viewpoint of storage stability of the aqueous coating composition of the invention.

The phosphate group-containing resin (C1) may be a phosphate group-containing acrylic resin (C1'), a phosphate group-containing polyester resin, a phosphate group-containing polyether resin, a phosphate group-containing polycarbonate resin, a phosphate group-containing polyurethane resin or a phosphate group-containing epoxy resin, and is preferably a phosphate group-containing acrylic resin (C1') from the viewpoint of storage stability of the aqueous coating composition of the invention and water resistance and chipping resistance of the formed coating film.

The phosphate group-containing acrylic resin (C1') can be synthesized by using a common method to copolymerize a polymerizable unsaturated monomer having a phosphate group with another polymerizable unsaturated monomer.

The polymerizable unsaturated monomer having a phosphate group may be any of the compounds mentioned above for the hydroxyl group- and carboxyl group-containing acrylic resin (A1).

Other polymerizable unsaturated monomers include the hydroxyl group-containing polymerizable unsaturated monomer (M-1) and carboxyl group-containing polymerizable unsaturated monomer (M-2) mentioned above for the hydroxyl group- and carboxyl group-containing acrylic resin (A1), and another copolymerizable polymerizable unsaturated monomer (M-3) with the exclusion of the aforementioned polymerizable unsaturated monomers having phosphate groups.

The polymerizable unsaturated monomer having a phosphate group in the phosphate group-containing acrylic resin (C1') is preferably present at 1 to 50 mass% and especially 5 to 40 mass% based on the total amount of each of the monomer components composing the phosphate group-containing acrylic resin.

From the viewpoint of finished outer appearance and film performance, the weight-average molecular weight of the phosphate group-containing acrylic resin (C1') is in the range of preferably 3000 to 30,000, especially 5000 to 25,000 and most especially of 10,000 to 20,000.

The content of the phosphate group-containing compound (C) is preferably 0.1 to 20 mass%, more preferably 0.5 to 15 mass% and even more preferably 1 to 10 mass%, based on the resin solid content of the aqueous coating composition.

Basic compound (D)

The basic compound (D) is a compound used to neutralize the carboxyl groups of the hydroxyl group- and carboxyl group-containing resin (A) and to adjust the pH of the aqueous coating composition. Therefore, this excludes compounds that chemically react with other functional groups, such as diamines among the chain extenders mentioned for explanation of the hydroxyl group- and carboxyl group-containing polyurethane resin (A3).

The content of the basic compound (D) may be an amount so that the pH of the aqueous coating composition of the invention is in the range of 7.0 to 8.2. The content of the basic compound (D) is preferably 0.1 to 15 mass%, more preferably 0.5 to 10 mass% and even more preferably 1 to 8 mass%, based on the resin solid content of the aqueous coating composition.

According to the invention, the basic compound (D) comprises (D1) a basic compound having an acid dissociation constant (PKa) in the range of 7.0 to 8.5 and a boiling point in the range of 100 to 200°C, the content of the basic compound (D1) being in the range of 50 to 100 mass% based on the mass of the basic compound (D).

Basic compound (D1)

The basic compound (D1) has an acid dissociation constant (PKa) in the range of 7.0 to 8.5 and a boiling point in the range of 100 to 200°C.

If the acid dissociation constant (PKa) is 7.0 or higher it will be possible to obtain an aqueous coating composition with excellent storage stability, and if it is 8.5 or lower it will be possible to obtain an aqueous coating composition with excellent hardness and water resistance of the formed coating film.

The acid dissociation constant (PKa) of the basic compound (D1) is preferably in the range of 7.2 to 8.2 and more preferably in the range of 7.3 to 7.8.

If the boiling point is 100°C or higher it will be possible to obtain an aqueous coating composition with excellent storage stability, and if it is 200°C or lower it will be possible to obtain an aqueous coating composition with excellent hardness and water resistance of the formed coating film.

The boiling point of the basic compound (D1) is preferably in the range of 105 to 180°C and more preferably in the range of 110 to 160°C.

Examples for the basic compound (D1) include morpholine (PKa: 8.4, boiling point: 129°C), allylmorpholine (PKa: 7.1, boiling point: 158°C), N-methylmorpholine (PKa: 7.4, boiling point: 116°C), N-ethylmorpholine (PKa: 7.7, boiling point: 139°C) and triallylamine (PKa: 8.3, boiling point: 156°C). Any of these may be used alone or in combinations of two or more.

The basic compound (D1) used is preferably N-methylmorpholine (PKa: 7.4, boiling point: 116°C) or N-ethylmorpholine (PKa: 7.7, boiling point: 139°C), from the viewpoint of storage stability of the aqueous coating composition of the invention and the hardness and water resistance of the formed coating film.

The content of the basic compound (D1) in the aqueous coating composition of the invention is in the range of 50 to 100 mass% based on the mass of the basic compound (D).

If the content of the basic compound (D1) in the aqueous coating composition of the invention is 50 mass% or greater it will be possible to obtain an aqueous coating composition with excellent storage stability and with excellent hardness and water resistance of the formed coating film.

The content of the basic compound (D1) in the aqueous coating composition of the invention is preferably in the range of 70 to 100 mass% and more preferably in the range of 90 to 100 mass%, based on the mass of the basic compound (D).

Examples for the basic compound (D), excluding the basic compound (D1), include ammonia, triethylamine, triethanolamine, 2-(dimethylamino)ethanol and diethylethanolamine.

While it is not completely understood why the aqueous coating composition of the invention has excellent storage stability and allows formation of a coating film exhibiting excellent film performance with high hardness and water resistance even when cured at relatively low temperature, it is conjectured that since the acid dissociation constant (PKa) of the basic compound (D1) is 7.0 or higher it is possible to neutralize the carboxyl groups of the hydroxyl group- and carboxyl group-containing resin (A), resulting in satisfactory storage stability, and since the acid dissociation constant (PKa) of the basic compound (D1) is 8.5 or lower it is possible to form a coating film exhibiting excellent film performance without inhibiting the catalytic effect of the phosphate group-containing compound (C) in reaction between the hydroxyl group- and carboxyl group-containing resin (A) and the blocked polyisocyanate compound (B). Moreover, it is thought that since the boiling point of the basic compound (D1) is 100°C or higher, less of the basic compound (D1) volatilizes during storage of the aqueous coating composition of the invention, resulting in satisfactory storage stability, and since the boiling point of the basic compound (D1) is 200°C or lower, more of the basic compound (D1) volatilizes during heat curing, making it possible to form a coating film exhibiting excellent film performance without inhibiting the catalytic effect of the phosphate group-containing compound (C) in reaction between the hydroxyl group- and carboxyl group-containing resin (A) and the blocked polyisocyanate compound (B).

Melamine resin (E)

The aqueous coating composition of the invention may further comprise a melamine resin (E).

The melamine resin (E) used may be a partially methylolated melamine resin or completely methylolated melamine resin obtained by reacting a melamine component and an aldehyde component. Aldehyde components include formaldehyde, paraformaldehyde, acetaldehyde and benzaldehyde.

The methylol groups in the methylolated melamine resin may also be partially or completely etherified with a suitable alcohol. Examples of alcohols to be used for the etherification include methyl alcohol, ethyl alcohol, n-propyl alcohol, i-propyl alcohol, n-butyl alcohol, i-butyl alcohol, 2-ethyl-1-butanol and 2-ethyl-1-hexanol.

Preferred for the melamine resin (E) are methyl etherified melamine resins having a methylol group of a partially or completely methylolated melamine resin partially or completely etherified with methyl alcohol, butyl etherified melamine resins having a methylol group of a partially or completely methylolated melamine resin partially or completely etherified with butyl alcohol, and methyl-butyl mixed etherified melamine resins having methylol groups of a partially or completely methylolated melamine resin partially or completely etherified with methyl alcohol and butyl alcohol, among which methyl-butyl mixed etherified melamine resins are more preferred.

The melamine resin (B) has a weight-average molecular weight of preferably 400 to 6,000, more preferably 500 to 4,000 and even more preferably 600 to 3,000.

The melamine resin (E) that is used may be a commercial product. Examples of trade names of commercial products include "CYMEL 202", "CYMEL 203", "CYMEL 204", "CYMEL 211", "CYMEL 212", "CYMEL 238", "CYMEL 251", "CYMEL 253", "CYMEL 254", "CYMEL 303", "CYMEL 323", "CYMEL 324", "CYMEL 325", "CYMEL 327", "CYMEL 350", "CYMEL 370", "CYMEL 380", "CYMEL 385", "CYMEL 1156", "CYMEL 1158", "CYMEL 1116" and "CYMEL 1130" (all by Allnex, Japan); "RESIMENE 735", "RESIMENE 740", "RESIMENE 741", "RESIMENE 745", "RESIMENE 746" and "RESIMENE 747" (all by Monsanto Corp.); "U-VAN 120", "U-VAN 20HS", "U-VAN 20SE", "U-VAN 2021", "U-VAN 2028" and "U-VAN 28-60" (all by Mitsui Chemicals, Inc.); and "SUMIMAL M55", "SUMIMAL M30W" and "SUMIMAL M50W" (all by Sumitomo Chemical Co., Ltd.).

When the aqueous coating composition of the invention comprises the aforementioned melamine resin (E), the content of the melamine resin (E) is preferably 2 to 40 mass%, more preferably 3 to 30 mass% and even more preferably 5 to 20 mass%, based on the resin solid content of the aqueous coating composition.

Other components

The aqueous coating composition of the invention may also contain, as necessary, resins other than those mentioned above, pigments, organic solvents, curing catalysts other than the phosphate group-containing compound (C), dispersing agents, anti-settling agents, antifoaming agents, thickening agents, ultraviolet absorbers, light stabilizers and surface control agents.

Examples of resins other than those mentioned above include acrylic resins lacking hydroxyl and/or carboxyl groups, polyester resins lacking hydroxyl and/or carboxyl groups, polyurethane resins lacking hydroxyl and/or carboxyl groups, polyether resins lacking hydroxyl and/or carboxyl groups, polycarbonate resins lacking hydroxyl and/or carboxyl groups, and epoxy resins lacking hydroxyl and/or carboxyl groups, among which carboxyl group-containing polyurethane resins lacking hydroxyl groups are preferably used.

A carboxyl group-containing polyurethane resin lacking hydroxyl groups can be obtained by reacting a polyol and a polyisocyanate compound, for example, by a common method. After the reaction, chain extension may be carried out in the presence of a chain extender, as a low molecular weight compound having at least 2 active hydrogens in the molecule, such as a diol or diamine. Either during or after preparation of the resin, it may be modified with an acrylic resin or the like.

The polyol, polyisocyanate and chain extender used may be any of the compounds mentioned for explanation of the hydroxyl group- and carboxyl group-containing polyurethane resin (A3).

The pigment used may be a color pigment, extender pigment or brightness pigment, for example. Such pigments may be used alone or in combinations of two or more.

When the aqueous coating composition of the invention comprises such a pigment, the content of the pigment is preferably in the range of 1 to 200 parts by mass, preferably 5 to 160 parts by mass and more preferably 15 to 140 parts by mass, based on 100 parts by mass as the resin solid content in the aqueous coating composition.

Examples for the color pigment include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments and the like.

When the aqueous coating composition of the invention comprises a color pigment, the content of the color pigment is in the range of 1 to 180 parts by mass, preferably 5 to 150 parts by mass and more preferably 15 to 130 parts by mass, based on 100 parts by mass as the resin solid content in the aqueous coating composition.

Examples of extender pigments include barium sulfate, talc, clay, kaolin, barium carbonate, calcium carbonate, silica and alumina white. The extender pigment used is preferably barium sulfate from the viewpoint of the design property.

When the aqueous coating composition of the invention comprises an extender pigment, the content of the extender pigment is in the range of 1 to 180 parts by mass, preferably 5 to 140 parts by mass and more preferably 10 to 120 parts by mass, based on 100 parts by mass as the resin solid content in the aqueous coating composition.

Examples of brightness pigments include aluminum (including vapor deposited aluminum), copper, zinc, brass, nickel, glass flakes, aluminum oxide, mica, titanium oxide- and/or iron oxide-coated aluminum oxide, and titanium oxide- and/or iron oxide-coated mica. Use of an aluminum pigment is preferred. Aluminum pigments include non-leafing aluminum pigments and leafing aluminum pigments, either of which may be used.

The brightness pigment is preferably flaky. The brightness pigment preferably has a dimension in the lengthwise direction in the range of generally 1 to 100 $\mu$m and especially 5 to 40 $\mu$m, and a thickness in the range of generally 0.001 to 5 $\mu$m and especially 0.01 to 2 $\mu$m.

When the aqueous coating composition of the invention comprises a brightness pigment, the content of the brightness pigment is in the range of 0.1 to 100 parts by mass, preferably 1 to 50 parts by mass and more preferably 3 to 25 parts by mass, based on 100 parts by mass as the resin solid content in the aqueous coating composition.

Examples of organic solvents include ketone-based solvents such as acetone, methyl ethyl ketone and methyl isobutyl ketone; ester-based solvents such as ethyl acetate, butyl acetate, methyl benzoate, ethyl ethoxypropionate, ethyl propionate and methyl propionate; alcohol-based solvents such as isopropanol, n-butanol, isobutanol and 2-ethylhexanol; ether-based solvents such as tetrahydrofuran, dioxane and dimethoxyethane; glycol ether-based solvents such as ethyleneglycol monomethyl ether, ethyleneglycol monoethyl ether, diethyleneglycol monomethyl ether, propyleneglycol monomethyl ether acetate and 3-methoxybutyl acetate; and aromatic hydrocarbon-based solvents and aliphatic hydrocarbon-based solvents.

For use, the aqueous coating composition of the invention may be applied after adding water and/or an organic solvent for dilution to adjust it to the appropriate viscosity, as necessary.

The suitable viscosity will differ depending on the coating composition, and for example, when prepared using a No. 4 Ford cup viscometer, it may be a viscosity at 20°C of usually about 20 to 100 seconds and preferably about 25 to 70 seconds.

The coating solid concentration of the aqueous coating composition will usually be about 5 to 70 mass% and is preferably about 10 to 55 mass%.

The aqueous coating composition of the invention may be either a one-pack type coating material or a multi-pack type coating material, but it is preferably a one-pack type coating material from the viewpoint of excellent productivity without a coating material mixing step, and of allowing maintenance of the coating machine to be simplified.

The aqueous coating composition of the invention may be coated onto an article to be coated by a known method such as air spray coating, airless spray coating, rotary atomizing coating or curtain coating, for example, and electrostatic application may also be carried out during the coating. Methods of air spray coating and rotary atomizing coating are preferred among these. Such coating methods may be carried out once or several times, until the desired film thickness is obtained.

The coating amount of the aqueous coating composition of the invention is usually preferred to be an amount that produces a cured film thickness of 5 to 40 $\mu$m, preferably 7 to 35 $\mu$m and more preferably 10 to 30 $\mu$m.

Method of forming coating film

Since the aqueous coating composition of the invention can form a coating film exhibiting excellent film performance including high hardness and water resistance even when cured at relatively low temperature, it can be suitably used in a method of forming a coating film by coating an aqueous coating composition of the invention onto an article to be coated to form an uncured colored coating film and subsequently heating and curing the uncured colored coating film at a temperature in the range of 60 to 110°C.

The following methods (A) to (D) may be mentioned as preferred modes of the method of forming a coating film.

Method (A)

A method of forming a coating film comprising:

step (A1): a step of coating the aqueous coating composition of the invention onto an article to be coated to form an uncured colored coating film, and

step (A2): a step of heating and curing the uncured colored coating film formed in step (A1) at a temperature in the range of 60 to 110°C.

Method (B)

A method of forming a coating film comprising:

step (B1): a step of coating the aqueous coating composition of the invention onto an article to be coated to form an uncured colored coating film,

step (B2): a step of coating a clear coating composition onto the uncured colored coating film to form an uncured clear coating film, and

step (B3): a step of simultaneously heating and curing the uncured colored coating film formed in step (B1) and the clear coating film formed in step (B2) at a temperature in the range of 60 to 110°C.

Method (C)

A method of forming a coating film comprising:

step (C1): a step of coating an intermediate coating composition onto an article to be coated to form an uncured intermediate coating film,

step (C2): a step of coating the aqueous coating composition of the invention onto the uncured intermediate coating film to form an uncured colored coating film,

step (C3): a step of coating a clear coating composition onto the uncured colored coating film to form an uncured clear coating film, and

step (C4): a step of simultaneously heating and curing the uncured intermediate coating film formed in step (C1), the uncured colored coating film formed in step (C2) and the clear coating film formed in step (C3), at a temperature in the range of 60 to 110°C.

Method (D)

A method of forming a coating film comprising:

step (D1): a step of coating the aqueous coating composition of the invention onto an article to be coated to form an uncured intermediate coating film,

step (D2): a step of coating a pigmented coating composition onto the uncured intermediate coating film to form an uncured colored coating film,

step (D3): a step of coating a clear coating composition onto the uncured colored coating film to form an uncured clear coating film, and

step (D4): a step of simultaneously heating and curing the uncured intermediate coating film formed in step (D1), the uncured colored coating film formed in step (D2) and the clear coating film formed in step (D3), at a temperature in the range of 60 to 110°C.

Examples for the article to be coated include outer plates and inner plates of automobile bodies of passenger vehicles, trucks, motorcycles and buses; automobile parts; and outer plates of consumer electric products such as cellular phones or audio devices. Preferred among these are outer plates and inner plates of automobile bodies, and automobile parts.

The material of the article to be coated is not particularly restricted. Examples include metal materials such as iron, aluminum, brass, copper, tin, stainless steel, galvanized steel and alloyed zinc (such as Zn-Al, Zn-Ni and Zn-Fe)-plated steel; resins such as polyethylene resins, polypropylene resins, acrylonitrile-butadiene-styrene (ABS) resins, polyamide resins, acrylic resins, vinylidene chloride resins, polycarbonate resins, polyurethane resins and epoxy resins, plastic materials such as various types of FRPs; inorganic materials such as glass, cement and concrete; wood materials; and fiber materials such as paper and fabrics. Metal materials and plastic materials are preferred among these.

Surfaces of articles to be coated, onto which the coating film may be applied, include automobile body outer plates and inner plates, automobile parts, household electrical appliances, and metal surfaces of the metal base materials, such as the steel sheets, composing them may be subjected to surface treatment such as phosphate treatment, chromate treatment or complex oxide treatment.

Articles, and optionally surface-treated articles, may also have additional coating films formed on them. For example, articles to be coated used as base materials, which are surface treated as necessary, may also have undercoat coating films formed on them. When the article to be coated is an automobile body, for example, an undercoat coating film may be formed using a known undercoat coating material, that is commonly used for coating of automobile bodies.

An undercoat coating material used for formation of an undercoat coating film may be an electrodeposition coating material, for example, and preferably a cationic electrodeposition coating material.

An intermediate coating composition may be one obtained by forming a coating material using a base resin such as an acrylic resin, polyester resin, alkyd resin, urethane resin or epoxy resin having a crosslinkable functional group such as a carboxyl or hydroxyl group, and a crosslinking agent such as an amino resin such as a melamine resin or urea resin or an optionally blocked polyisocyanate compound, together with a pigment, thickening agent and other optionally selected components.

A pigmented coating composition may be one obtained by forming a coating material using a base resin such as an acrylic resin, polyester resin, alkyd resin, urethane resin or epoxy resin having a crosslinkable functional group such as a carboxyl or hydroxyl group, and a crosslinking agent such as an amino resin such as a melamine resin or urea resin or an optionally blocked polyisocyanate compound, together with a pigment, thickening agent and other optionally selected components.

The clear coating composition may be any thermosetting clear coating composition that is known for coating onto automobile bodies and the like. The thermosetting clear coating composition may be, for example, an organic solvent-type thermosetting coating composition, an aqueous thermosetting coating composition or a powder thermosetting coating composition, containing a base resin with a crosslinkable functional group, and a curing agent.

Examples of crosslinkable functional groups in the base resin include carboxyl, hydroxyl, epoxy and silanol groups. Examples of types of resins for the base resin include acrylic resins, polyester resins, alkyd resins, urethane resins, epoxy resins and fluorine resins. Examples for the curing agent include polyisocyanate compounds, blocked polyisocyanate compounds, melamine resins, urea resins, carboxyl group-containing compounds, carboxyl group-containing resins, epoxy group-containing resins and epoxy group-containing compounds.

Preferred base resin/curing agent combinations for the clear coating composition include hydroxyl group-containing resin/polyisocyanate compounds, carboxyl group-containing resin/epoxy group-containing resins, hydroxyl group-containing resin/blocked polyisocyanate compounds and hydroxyl group-containing resin/melamine resin combinations, with hydroxyl group-containing resin/polyisocyanate compound combinations being more preferred.

The clear coating composition may also be a one-pack type coating material, or a multi-pack type coating material such as a two-pack type urethane resin coating material.

The clear coating composition may also contain, as necessary, color pigments, brightness pigments, dyes and the like in ranges that do not impair the transparency, and may further contain, as suitable, extender pigments, ultraviolet absorbers, light stabilizers, antifoaming agents, thickening agents, rust-preventive agents, surface control agents and the like.

The method of applying the clear coating composition is not particularly restricted, and for example, a wet coating film may be formed by a method such as air spray coating, airless spray coating, rotary atomizing coating or curtain coating. An electrostatic charge may also be applied if necessary in these coating methods. Air spray coating and rotary atomizing coating are especially preferred. The coating amount of the clear coating composition is usually preferred to be an amount that produces a cured film thickness of 10 to 70 $\mu$m and preferably 20 to 50 $\mu$m.

When carrying out air spray coating, airless spray coating or rotary atomizing coating, the viscosity of the clear coating composition is preferably adjusted as appropriate using an organic solvent or other solvent to within a suitable viscosity range for coating, which will usually be a viscosity range of about 15 to 60 seconds and especially 20 to 50 seconds at 20°C, as measured with a No. 4 Ford cup viscometer.

Heating may be carried out by publicly known heating means, using a drying furnace such as an air heating furnace, electric furnace or infrared induction heating furnace, for example. The heating temperature is in the range of preferably 60 to 110°C and more preferably 70 to 90°C. The heating time is not particularly restricted but is in the range of preferably 10 to 40 minutes and more preferably 20 to 40 minutes.

Automobile body coating method

An automobile body coating method of the invention comprises a step of forming a first multilayer coating film on an outer plate of an automobile body, and a step of forming a second coating film on an inner plate of an automobile body, wherein the step of forming the first multilayer coating film includes (1a) an outer plate colored base coating film-forming step in which an aqueous coating composition (X) is coated onto an outer plate of the automobile body to form an uncured outer plate colored base coating film (BCo), (1b) an outer plate clear coating film-forming step in which a clear coating material (Y) is coated onto the uncured outer plate colored base coating film (BCo) to form an uncured outer plate clear coating film (CCo), and (1c) a baking step in which the uncured outer plate colored base coating film (BCo) and the uncured outer plate clear coating film (CCo) are heated to simultaneously cure the coating films, the step of forming the second coating film includes (2a) an inner plate colored coating film-forming step in which the aqueous coating composition (X) is coated onto an inner plate of the automobile body to form an uncured inner plate colored coating film (PCi), and (2b) a baking step in which the uncured inner plate colored coating film (PCi) is heated and cured, and the aqueous coating composition (X) is an aqueous coating composition of the invention.

An outer plate of an automobile body (hereunder also referred to simply as "outer plate") is a part that is externally visible from outside of the completed vehicle after the fitting steps.

An inner plate of an automobile body (hereunder also referred to simply as "inner plate") is a part that is not externally visible from outside of the completed vehicle after the fitting steps.

Outer plates and inner plates are usually formed from coated steel that has an electrodeposition coating on a steel sheet such as a cold-rolled steel sheet, galvanized steel sheet, zinc alloy-plated steel sheet, stainless steel plate or tin-plated steel sheet.

The steel sheet may also be subjected to chemical conversion treatment before coating of the electrodeposition coating material. Examples of chemical conversion treatment include phosphate treatment such as zinc phosphate treatment or iron phosphate treatment, compound oxide film treatment, chromium phosphate treatment and chromate treatment.

The coated steel may also have an intermediate coating film formed by coating of an intermediate coating composition after coating of the electrodeposition coating material, and the intermediate coating film may be uncured. The intermediate coating composition used may be an intermediate coating composition as explained under "Method of forming coating film" above.

Step of forming first multilayer coating film

The step of forming the first multilayer coating film includes the following steps (1a) to (1c).

Step (1a)

In step (1a) of the invention, an outer plate of an automobile body is coated with an aqueous coating composition (X) to form an uncured outer plate colored base coating film (BCo).

The aqueous coating composition (X) used is an aqueous coating composition of the invention.

The method of applying the aqueous coating composition (X) may be an air spray method, airless spray method or electrostatic coating method, for example.

The film thickness of the outer plate colored base coating film (BCo) will usually be 5 to 40 $\mu$m, preferably 7 to 35 $\mu$m and more preferably 10 to 30 $\mu$m, as the cured film thickness.

Before applying the clear coating material (Y), the outer plate colored base coating film (BCo) may be subjected to preheating, air blowing and other processing under heating conditions that substantially do not cure the coating film. The temperature for preheating is preferably 40 to 100°C, more preferably 50 to 90°C and even more preferably 60 to 80°C. The preheating time is preferably 30 seconds to 15 minutes, more preferably 1 to 10 minutes and even more preferably 2 to 5 minutes. Air blowing may also be carried out by blasting the coated surface of the article to be coated with heated air at a temperature of usually ordinary temperature or 25°C to 80°C, for a period of 30 seconds to 15 minutes, for example.

In the first multilayer coating film of the invention, the pigmented coating composition (Z) may be applied onto the uncured outer plate colored base coating film (BCo) before application of the clear coating material (Y), to form an uncured outer plate second colored base coating film (BCo2). The pigmented coating composition (Z) used may be a pigmented coating composition as explained under "Method of forming coating film" above.

Step (1b)

In step (1b) of the invention, the clear coating material (Y) is applied onto the uncured outer plate colored base coating film (BCo) to form an uncured outer plate clear coating film (CCo).

The clear coating material (Y) used may be a clear coating composition as explained under "Method of forming coating film" above.

The method of applying the clear coating material (Y) may be an air spray method, airless spray method or electrostatic coating method, for example.

The film thickness of the outer plate clear coating film (CCo) will usually be 10 to 70 $\mu$m and preferably 20 to 50 $\mu$m, as the cured film thickness.

Step (1c)

In step (1c) of the invention, the uncured outer plate colored base coating film (BCo) and the uncured outer plate clear coating film (CCo) are heated to simultaneously cure both coating films.

Heating may be carried out by publicly known heating means, using a drying furnace such as an air heating furnace, electric furnace or infrared induction heating furnace, for example. The heating temperature is in the range of preferably 60 to 110°C and more preferably 70 to 90°C. The heating time is not particularly restricted but is in the range of preferably 10 to 40 minutes and more preferably 20 to 40 minutes.

Step of forming second coating film

The step of forming the second coating film includes the following steps (2a) and (2b).

Step (2a)

In step (2a) of the invention, an inner plate of an automobile body is coated with an aqueous coating composition (X) to form an uncured inner plate colored coating film (PCi).

The aqueous coating composition (X) used is an aqueous coating composition of the invention.

The method of coating the aqueous coating composition (X) may be an air spray method, airless spray method or electrostatic coating method, for example.

The film thickness of the inner plate colored coating film (PCi) will usually be 5 to 40 $\mu$m, preferably 7 to 35 $\mu$m and more preferably 10 to 30 $\mu$m, as the cured film thickness.

In this coating method, a system without coating of a clear coating material is employed to form the second coating film on the inner plate.

Employing such a system allows the cost of the inner plate coating step to be reduced.

By using the same aqueous coating composition (X) on inner plates as for outer plates it is possible to reduce the types of coating materials used and thus lower costs for the inner plate coating step.

Step (2b)

In step (2b) of the invention, the uncured inner plate colored coating film (PCi) is heated and cured. From the viewpoint of energy savings, the baking step in step (2b) is preferably carried out simultaneously with the baking step in step (1c).

Heating may be carried out by publicly known heating means, using a drying furnace such as an air heating furnace, electric furnace or infrared induction heating furnace, for example. The heating temperature may be 60 to 110°C, and is preferably in the range of 70 to 90°C. The heating time is not particularly restricted but is in the range of preferably 10 to 40 minutes and more preferably 20 to 40 minutes.

The automobile body coating method of the invention comprises a step of forming a first coating film on an outer plate of an automobile body, and a step of forming a second coating film on an inner plate of an automobile body, wherein the step of forming the first coating film includes (1a') an outer plate colored coating film-forming step in which an aqueous coating composition (X) is coated onto an outer plate of the automobile body to form an uncured outer plate colored coating film (PCo), and (1b') a baking step in which the uncured outer plate colored coating film (PCo) is heated and cured, the step of forming the second coating film includes (2a') an inner plate colored coating film-forming step in which the aqueous coating composition (X) is coated onto an inner plate of the automobile body to form an uncured inner plate colored coating film (PCi), and (2b') a baking step in which the uncured inner plate colored coating film (PCi) is heated and cured, and the aqueous coating composition (X) is an aqueous coating composition of the invention.

Step of forming first coating film

The step of forming the first coating film includes the following steps (1a') and (1b').

Step (1a')

In step (1a') of the invention, an outer plate of an automobile body is coated with an aqueous coating composition (X) to form an uncured outer plate colored coating film (PCo).

The aqueous coating composition (X) used is an aqueous coating composition of the invention.

The method of coating the aqueous coating composition (X) may be an air spray method, airless spray method or electrostatic coating method, for example.

The film thickness of the outer plate colored coating film (PCo) will usually be 5 to 40 $\mu$m, preferably 7 to 35 $\mu$m and more preferably 10 to 30 $\mu$m, as the cured film thickness.

Step (1b')

In step (1b') of the invention, the uncured outer plate colored coating film (PCo) is heated and cured.

Heating may be carried out by publicly known heating means, using a drying furnace such as an air heating furnace, electric furnace or infrared induction heating furnace, for example. The heating temperature is in the range of preferably 60 to 110°C and more preferably 70 to 90°C. The heating time is not particularly restricted but is in the range of preferably 10 to 40 minutes and more preferably 20 to 40 minutes.

In this coating method, a system without coating of a clear coating material is employed to form the first coating film on the outer plate.

Employing such a system allows the cost of the outer plate coating step to be reduced.

Step of forming second coating film

The step of forming the second coating film includes the following steps (2a') and (2b').

Step (2a')

In step (2a') of the invention, an inner plate of an automobile body is coated with an aqueous coating composition (X) to form an uncured inner plate colored coating film (PCi).

The aqueous coating composition (X) used is an aqueous coating composition of the invention.

The method of coating the aqueous coating composition (X) may be an air spray method, airless spray method or electrostatic coating method, for example.

The film thickness of the inner plate colored coating film (PCi) will usually be 5 to 40 $\mu$m, preferably 7 to 35 $\mu$m and more preferably 10 to 30 $\mu$m, as the cured film thickness.

According to the invention, a system without coating of a clear coating material is employed to form the second coating film on the inner plate.

Employing such a system allows the cost of the inner plate coating step to be reduced.

By using the same aqueous coating composition (X) on inner plates as for outer plates it is possible to reduce the types of coating materials used and thus lower costs for the inner plate coating step.

Step (2b')

In step (2b') of the invention, the uncured inner plate colored coating film (PCi) is heated and cured. From the viewpoint of energy savings, the baking step in step (2b') is preferably carried out simultaneously with the baking step in step (1c).

Heating may be carried out by publicly known heating means, using a drying furnace such as an air heating furnace, electric furnace or infrared induction heating furnace, for example. The heating temperature may be 60 to 110°C, and is preferably in the range of 70 to 90°C. The heating time is not particularly restricted but is in the range of preferably 10 to 40 minutes and more preferably 20 to 40 minutes.

EXAMPLES

The present invention will now be explained in greater detail using Production Examples, Examples and Comparative Examples. The Production Examples, Examples and Comparative Examples are merely for illustration and are not intended to limit the scope of the invention. Throughout the Production Examples, Examples and Comparative Examples, the "parts" and "%" values are based on mass, unless otherwise specified. The film thicknesses of the coating films are based on the cured coating films.

Production of hydroxyl group- and carboxyl group-containing resin (A)

Production of hydroxyl group- and carboxyl group-containing acrylic resin particles (A1') with core-shell structure

Production Example 1

In a reactor equipped with a thermometer, thermostat, stirrer, reflux condenser, nitrogen inlet tube and dropper there were charged 130 parts of deionized water and 0.52 part of AQUALON KH-10 (trade name of DKS Co., Ltd., emulsifier, active ingredient: 97%), and then the mixture was stirred under a nitrogen stream and the temperature was increased to 80°C.

Next, 1.72 parts of the monomer emulsion (1) described below and 5.3 parts of a 6% ammonium persulfate aqueous solution were introduced into the reactor, and the mixture was kept at 80°C for 15 minutes. The remainder of the monomer emulsion (1) was then added dropwise into the reactor which was kept at the same temperature over a period of 3 hours, and upon completion of the dropwise addition the mixture was aged for 1 hour. Next, the monomer emulsion (2) described below was added dropwise over a period of 1 hour, and after aging for 1 hour, the mixture was cooled to 30°C while gradually adding 20 parts of a 5% N-ethylmorpholine aqueous solution to the reactor, and discharged while filtering with a 100 mesh nylon cloth to obtain hydroxyl group- and carboxyl group-containing acrylic resin particles (A1'-1) with a solid concentration of 30%. The obtained hydroxyl group- and carboxyl group-containing acrylic resin particles (A1'-1) had an acid value of 16 mgKOH/g, a hydroxyl value of 66 mgKOH/g and a glass transition temperature of 21°C.

Monomer emulsion (1): 42 parts of deionized water, 0.72 part of AQUALON KH-10, 2 parts of methylenebisacrylamide, 5 parts of styrene, 15 parts of methyl methacrylate, 5 parts of 2-hydroxyethyl methacrylate and 23 parts of *n*-butyl acrylate were mixed and stirred to obtain monomer emulsion (1).

Monomer emulsion (2): 42 parts of deionized water, 0.72 part of AQUALON KH-10, 0.05 part of ammonium persulfate, 2.5 parts of methacrylic acid, 10 parts of 2-hydroxyethyl methacrylate, 5 parts of styrene, 12.5 parts of methyl methacrylate, 10 parts of n-butyl acrylate and 10 parts of *n*-butyl methacrylate were mixed and stirred to obtain monomer emulsion (2).

Production Example 2

In a reactor equipped with a thermometer, thermostat, stirrer, reflux condenser, nitrogen inlet tube and dropper there were charged 130 parts of deionized water and 0.52 part of AQUALON KH-10 (trade name of DKS Co., Ltd., emulsifier, active ingredient: 97%), and then the mixture was stirred under a nitrogen stream and the temperature was increased to 80°C.

Next, 1.72 parts of the monomer emulsion (1) described below and 5.3 parts of a 6% ammonium persulfate aqueous solution were introduced into the reactor, and the mixture was kept at 80°C for 15 minutes. The remainder of the monomer emulsion (1) was then added dropwise into the reactor which was kept at the same temperature over a period of 3 hours, and upon completion of the dropwise addition the mixture was aged for 1 hour. Next, the monomer emulsion (2) described below was added dropwise over a period of 1 hour, and after aging for 1 hour, the mixture was cooled to 30°C while gradually adding 20 parts of a 5% 2-(dimethylamino)ethanol aqueous solution to the reactor, and discharged while filtering with a 100 mesh nylon cloth to obtain hydroxyl group- and carboxyl group-containing acrylic resin particles (A1'-2) with a solid concentration of 30%. The obtained hydroxyl group- and carboxyl group-containing acrylic resin particles (A1'-2) had an acid value of 16 mgKOH/g, a hydroxyl value of 66 mgKOH/g and a glass transition temperature of 21°C.

Monomer emulsion (1): 42 parts of deionized water, 0.72 part of AQUALON KH-10, 2 parts of methylenebisacrylamide, 5 parts of styrene, 15 parts of methyl methacrylate, 5 parts of 2-hydroxyethyl methacrylate and 23 parts of *n*-butyl acrylate were mixed and stirred to obtain monomer emulsion (1).

Monomer emulsion (2): 42 parts of deionized water, 0.72 part of AQUALON KH-10, 0.05 part of ammonium persulfate, 2.5 parts of methacrylic acid, 10 parts of 2-hydroxyethyl methacrylate, 5 parts of styrene, 12.5 parts of methyl methacrylate, 10 parts of *n*-butyl acrylate and 10 parts of *n*-butyl methacrylate were mixed and stirred to obtain monomer emulsion (2).

Production of hydroxyl group- and carboxyl group-containing acrylic resin particles (A1") with core-shell structure including gradient polymer layer

Production Example 3

In a reactor equipped with a thermometer, thermostat, stirrer, reflux condenser, nitrogen inlet tube and dropper there were charged 130 parts of deionized water and 0.52 part of AQUALON KH-10 (trade name of DKS Co., Ltd., emulsifier, active ingredient: 97%), and then the mixture was stirred under a nitrogen stream and the temperature was increased to 80°C.

Next, 1.72 parts of the monomer emulsion (1) described below and 5.3 parts of a 6% ammonium persulfate aqueous solution were introduced into the reactor, and the mixture was kept at 80°C for 15 minutes. After then adding 35.4 parts of monomer emulsion (1) over a period of 1 hour, the mixture was added dropwise into a reactor which was kept at the same temperature, and immediately upon completion of the dropwise addition the remaining 55.6 parts of monomer emulsion (1) was added dropwise into the reactor. At the same time, 55.6 parts of monomer emulsion (2) was added dropwise to the monomer emulsion (1), over a period of 2 hours until completion of the dropwise addition of the monomer emulsion (1) and monomer emulsion (2). Next, the remaining 37.17 parts of monomer emulsion (2) was added dropwise over a period of 1 hour into the reactor, and after aging for 1 hour, the mixture was cooled to 30°C while gradually adding 20 parts of a 5% N-ethylmorpholine aqueous solution to the reactor, and discharged while filtering with a 100 mesh nylon cloth to obtain hydroxyl group- and carboxyl group-containing acrylic resin particles (A1"-1) with a solid concentration of 30%. The obtained hydroxyl group- and carboxyl group-containing acrylic resin particles (A1"-1) had an acid value of 16 mgKOH/g, a hydroxyl value of 66 mgKOH/g and a glass transition temperature of 21°C.

Monomer emulsion (1): 42 parts of deionized water, 0.72 part of AQUALON KH-10, 2 parts of methylenebisacrylamide, 5 parts of styrene, 15 parts of methyl methacrylate, 5 parts of 2-hydroxyethyl methacrylate and 23 parts of n-butyl acrylate were mixed and stirred to obtain monomer emulsion (1).

Monomer emulsion (2): 42 parts of deionized water, 0.72 part of AQUALON KH-10, 0.05 part of ammonium persulfate, 2.5 parts of methacrylic acid, 10 parts of 2-hydroxyethyl methacrylate, 5 parts of styrene, 12.5 parts of methyl methacrylate, 10 parts of n-butyl acrylate and 10 parts of n-butyl methacrylate were mixed and stirred to obtain monomer emulsion (2).

Production of hydroxyl group- and carboxyl group-containing polyester resin (A2)

Production Example 4

Into a reactor equipped with a thermometer, thermostat, stirrer, reflux condenser and water separator there were charged 174 parts of trimethylolpropane, 327 parts of neopentyl glycol, 352 parts of adipic acid, 109 parts of isophthalic acid and 101 parts of 1,2-cyclohexanedicarboxylic anhydride, and after heating from 160°C to 230°C over a period of 3 hours, the condensation water produced was distilled off with a water separator while maintaining a temperature of 230°C, and reaction was conducted until the acid value fell below 3 mgKOH/g. To this reaction product there was added 59 parts of trimellitic anhydride, and after addition reaction at 170°C for 30 minutes, it was cooled to below 50°C, 75.8 parts of N-ethylmorpholine was added for neutralization, and then deionized water was gradually added to obtain a hydroxyl group- and carboxyl group-containing polyester resin solution (A2-1) with a solid concentration of 45%. The hydroxyl value of the obtained hydroxyl group- and carboxyl group-containing polyester resin was 128 mgKOH/g, the acid value was 35 mgKOH/g and the weight-average molecular weight was 13,000.

Production Example 5

Into a reactor equipped with a thermometer, thermostat, stirrer, reflux condenser and water separator there were charged 174 parts of trimethylolpropane, 327 parts of neopentyl glycol, 352 parts of adipic acid, 109 parts of isophthalic acid and 101 parts of 1,2-cyclohexanedicarboxylic anhydride, and after heating from 160°C to 230°C over a period of 3 hours, the condensation water produced was distilled off with a water separator while maintaining a temperature of 230°C, and reaction was conducted until the acid value fell below 3 mgKOH/g. To this reaction product there was added 59 parts of trimellitic anhydride, and after addition reaction at 170°C for 30 minutes, it was cooled to below 50°C, 58.7 parts of 2-(dimethylamino)ethanol was added for neutralization, and then deionized water was gradually added to obtain a hydroxyl group- and carboxyl group-containing polyester resin solution (A2-2) with a solid concentration of 45%. The hydroxyl value of the obtained hydroxyl group- and carboxyl group-containing polyester resin was 128 mgKOH/g, the acid value was 35 mgKOH/g and the weight-average molecular weight was 13,000.

Production of hydroxyl group- and carboxyl group-containing polyurethane resin (A3)

Production Example 6

After charging 211.9 parts of polytetramethylene glycol (number-average molecular weight: 1000), 11.5 parts of 2,2-dimethylolpropionic acid, 6.9 parts of trimethylolpropane, 112.2 parts of isophorone diisocyanate and 298.5 parts of methyl ethyl ketone into a reaction tank equipped with a thermometer, stirrer and reflux condenser, the reaction system was exchanged with nitrogen gas, and then reaction was conducted at 80°C while stirring to obtain an NCO-terminal urethane prepolymer with a free isocyanate group content of 3.2%. The obtained methyl ethyl ketone solution was cooled to 40°C and 493.2 g of deionized water containing 9.8 parts of N-ethylmorpholine was added for emulsification, and then 275.9 parts of a 5% N-(2-hydroxyethyl)ethylenediamine aqueous solution was added and the mixture was stirred for 60 minutes, after which the methyl ethyl ketone was distilled off while heating under reduced pressure and the concentration was adjusted with deionized water to obtain a hydroxyl group- and carboxyl group-containing polyurethane resin dispersion (A3-1) with a solid content of 35%, an acid value of 14 mgKOH/g, a hydroxyl value of 12 mgKOH/g and a mean particle size of 120 nm.

Production Example 7

After charging 211.9 parts of polytetramethylene glycol (number-average molecular weight: 1000), 11.5 parts of 2,2-dimethylolpropionic acid, 6.9 parts of trimethylolpropane, 112.2 parts of isophorone diisocyanate and 298.5 parts of methyl ethyl ketone into a reaction tank equipped with a thermometer, stirrer and reflux condenser, the reaction system was exchanged with nitrogen gas, and then reaction was conducted at 80°C while stirring to obtain an NCO-terminal urethane prepolymer with a free isocyanate group content of 3.2%. The obtained methyl ethyl ketone solution was cooled to 40°C and 493.2 g of deionized water containing 8.6 parts of triethylamine was added for emulsification, and then 275.9 parts of a 5% N-(2-hydroxyethyl)ethylenediamine aqueous solution was added and the mixture was stirred for 60 minutes, after which the methyl ethyl ketone was distilled off while heating under reduced pressure and the concentration was adjusted with deionized water to obtain a hydroxyl group- and carboxyl group-containing polyurethane resin dispersion (A3-2) with a solid content of 35%, an acid value of 14 mgKOH/g, a hydroxyl value of 12 mgKOH/g and a mean particle size of 120 nm.

Production of carboxyl group-containing polyurethane resin lacking hydroxyl groups (U-1)

Production Example 8

After charging 211.9 parts of polytetramethylene glycol (number-average molecular weight: 1000), 11.5 parts of 2,2-dimethylolpropionic acid, 6.9 parts of trimethylolpropane, 112.2 parts of isophorone diisocyanate and 298.5 parts of methyl ethyl ketone into a reaction tank equipped with a thermometer, stirrer and reflux condenser, the reaction system was exchanged with nitrogen gas, and then reaction was conducted at 80°C while stirring to obtain an NCO-terminal urethane prepolymer with a free isocyanate group content of 3.2%. The obtained methyl ethyl ketone solution was cooled to 40°C and 493.2 g of deionized water containing 9.8 parts of N-ethylmorpholine was added for emulsification, and then 159.2 parts of a 5% ethylenediamine aqueous solution was added and the mixture was stirred for 60 minutes, after which the methyl ethyl ketone was distilled off while heating under reduced pressure and the concentration was adjusted with deionized water to obtain a dispersion of a carboxyl group-containing polyurethane resin lacking hydroxyl groups (U-1) with a solid content of 35%, an acid value of 14 mgKOH/g and a mean particle size of 120 nm.

Production of blocked polyisocyanate compound (B)

Production Example 9

After charging 1500 parts of "SUMIDUR N-3300" (trade name of Sumika Bayer Urethane Co., Ltd., polyisocyanate containing isocyanurate structure derived from hexamethylene diisocyanate, solid content: 100%, isocyanate group content: 21.8%) and 0.9 part of 2,6-di-*t*-butyl-4-methylphenol into a reactor equipped with a thermometer, thermostat, stirrer, reflux condenser, nitrogen inlet tube, dropper and simple trap for the removed solvent, the contents were thoroughly mixed and heated under a nitrogen stream at 130°C for 3 hours. Next, 1200 parts of ethyl acetate and 1300 parts of diisopropyl malonate were added, 14 parts of a 28% methanol solution of sodium methoxide was further added while stirring under a nitrogen stream, and the mixture was stirred at 65°C for 8 hours to obtain a blocked polyisocyanate compound (B-1) with a solid content of 70% and a weight-average molecular weight of 4,000.

Production Example 10

After charging 1610 parts of "SUMIDUR N-3300" (trade name of Sumika Bayer Urethane Co., Ltd., polyisocyanate containing isocyanurate structure derived from hexamethylene diisocyanate, solid content: 100%, isocyanate group content: 21.8%), 1200 parts of "PTMG2000" (trade name of Mitsubishi Chemical Corp., polytetramethylene ether glycol, average molecular weight: 2,000, solid content: 100%) and 0.9 part of 2,6-di-*t*-butyl-4-methylphenol into a reactor equipped with a thermometer, thermostat, stirrer, reflux condenser, nitrogen inlet tube and dropper, the contents were thoroughly mixed and heated under a nitrogen stream at 130°C for 3 hours. Next, 1200 parts of ethyl acetate and 1250 parts of diisopropyl malonate were added, 14 parts of a 28% methanol solution of sodium methoxide was further added while stirring under a nitrogen stream, and the mixture was stirred at 65°C for 8 hours and diluted with ethyl acetate to a final solid content of 70% to obtain blocked polyisocyanate compound (B-2) with a solid content of 70% and a weight-average molecular weight of 50,000.

Production of phosphate group-containing acrylic resin (C1')

Production Example 11

A mixed solvent comprising 27.5 parts of methoxypropanol and 27.5 parts of isobutanol was placed in a reactor equipped with a thermometer, thermostat, stirrer, reflux condenser and dropper, and heated to 110°C. Next, 121.5 parts of a mixture comprising 25 parts of styrene, 27.5 parts of *n*-butyl methacrylate, 20 parts of "Isostearyl Acrylate" (trade name of Osaka Organic Chemical Industry, Ltd., branched higher alkyl acrylate), 7.5 parts of 4-hydroxybutyl acrylate, 15 parts of a phosphate group-containing polymerizable monomer described below, 12.5 parts of 2-methacryloyloxyethyl acid phosphate, 10 parts of isobutanol and 4 parts of *t*-butylperoxy octanoate was added to the mixed solvent over a period of 4 hours, and then a mixture of 0.5 part of *t*-butylperoxy octanoate and 20 parts of isopropanol was added dropwise over a period of one hour. The mixture was then stirred and aged for 1 hour to obtain a phosphate group-containing acrylic resin solution (C1'-1) with a solid concentration of 50%. The acid value due to phosphate groups of the resin was 83 mgKOH/g, the hydroxy value was 29 mgKOH/g, and the weight-average molecular weight was 10,000.

Phosphate group-containing polymerizable monomer: After placing 57.5 parts of monobutylphosphoric acid and 41 parts of isobutanol in a reactor equipped with a thermometer, thermostat, stirrer, reflux condenser and dropper and heating them to 90°C, 42.5 parts of glycidyl methacrylate was added dropwise over a period of 2 hours, and the mixture was further stirred and aged for 1 hour. Next, 59 parts of isopropanol was added to obtain a phosphate group-containing polymerizable monomer solution with a solid concentration of 50%. The acid value due to the phosphate groups in the obtained monomer was 285 mgKOH/g.

Production of pigment dispersions

Production Example 12

After placing 44.4 parts of the hydroxyl group- and carboxyl group-containing polyester resin solution (A2-1) obtained in Production Example 4 (solid content: 20 parts), 10 parts of "Mitsubishi Carbon Black MA-100" (trade name of Mitsubishi Chemical Corp., carbon black) and 50 parts of deionized water in a stirrer-equipped vessel and uniformly mixing them, 0.5 part of N-ethylmorpholine was further added to the mixture and the pH was adjusted to 7.5. Next, the obtained mixed solution was placed in a wide-mouth glass bottle, glass beads with diameters of about 1.3 mmφ were added as a dispersion medium, the bottle was sealed, and the mixture was dispersed for 4 hours with a paint shaker to obtain pigment dispersion (P-1).

Production Example 13

After placing 44.4 parts of the hydroxyl group- and carboxyl group-containing polyester resin solution (A2-2) obtained in Production Example 5 (solid content: 20 parts), 10 parts of "Mitsubishi Carbon Black MA-100" (trade name of Mitsubishi Chemical Corp., carbon black) and 50 parts of deionized water in a stirrer-equipped vessel and uniformly mixing them, 0.3 part of 2-(dimethylamino)ethanol was further added to the mixture and the pH was adjusted to 7.5. Next, the obtained mixed solution was placed in a wide-mouth glass bottle, glass beads with diameters of about 1.3 mmφ were added as a dispersion medium, the bottle was sealed, and the mixture was dispersed for 4 hours with a paint shaker to obtain pigment dispersion (P-2).

Production of aqueous coating compositions

Example 1

There were uniformly mixed 104.9 parts of the pigment dispersion (P-1) obtained in Production Example 12, 100 parts of the hydroxyl group- and carboxyl group-containing acrylic resin particles (A1'-1) obtained in Production Example 1 (solid content: 30 parts), 57.1 parts of the hydroxyl group- and carboxyl group-containing polyurethane resin dispersion (A3-1) obtained in Production Example 6 (solid content: 20 parts), 42.9 parts of the blocked polyisocyanate compound (B-1) obtained in Production Example 9 (solid content: 30 parts), and 4 parts of the phosphate group-containing acrylic resin solution (C1'-1) obtained in Production Example 11 (solid content: 2 parts). Next, 0.6 part of N-ethylmorpholine was added as a pH-adjusting basic compound (D) for adjustment to pH 7.7. To the obtained mixture there were then added "UH-752" (trade name of Adeka Corp., thickening agent) and deionized water, to obtain aqueous coating composition No. 1 having pH of 7.7, a coating material solid content of 48%, and a viscosity of 30 seconds with a No. 4 Ford cup at 20°C.

Examples 2 to 20 and Comparative Examples 1 to 9

Aqueous coating compositions No. 2 to 29, each having a viscosity of 30 seconds with a No. 4 Ford cup at 20°C, were obtained in the same manner as Example 1, except that the compositions were as listed in Table 1-1 to Table 1-3.

The storage stabilities of aqueous coating compositions No. 1 to 29 were evaluated based on pH variation and viscosity change rate.

pH variation: This was evaluated by the difference between the pH value immediately after production and the pH value after standing for 10 days at 40°C, based on the values measured using an "F-71" (pH meter, trade name of Horiba, Ltd.).

pH variation = |pH value after standing at 40°C for 10 days - pH value immediately after production|

Scores of VG and G are acceptable.

VG: pH variation of <0.1,

G: pH variation of ≥0.1 and <0.3,

P: pH variation of ≥0.3.

Viscosity change rate: This was evaluated by the rate of change between the viscosity immediately after production and the viscosity after standing for 10 days at 40°C, based on the viscosity after 1 minute at 60 rpm measured using an "LVDV-I" (Brookfield viscometer, trade name of Brookfield Co.).

$$\text{Viscosity change rate (\%)} = |(\text{Viscosity after standing for 10 days at 40°C})/\text{viscosity immediately after production}) - 1| \times 100$$

Scores of VG and G are acceptable.

VG: viscosity change rate of <20%,

G: viscosity change rate of ≥20% and <50%,

P: viscosity change rate of ≥50%.

The storage stability results are shown together in Table 1-1 to Table 1-3.

[Table 1-1]

| | | | Examples | | | | | | | | | |
|---|---|---|---|---|---|---|---|---|---|---|---|---|
| | | | 1 | 2 3 | | 4 | 5 | 6 | 7 | 8 | 9 | 10 |
| Aqueous coating composition No. | | | 1 | 2 | 3 | 4 | 5 | 6 | 7 | 8 | 9 | 10 |
| Pigment dispersion | | Pigment dispersion name | P-1 | P-1 | P-1 | P-1 | P-1 | P-1 | P-1 | P-1 | P-1 | P-1 |
| | Hydroxyl group-and carboxyl group-containing resin (A) | Polyester resin solution (A2-1) | 20 | 20 | 20 | 20 | 20 | 20 | 20 | 20 | 20 | 20 |
| | | Polyester resin solution (A2-2) | | | | | | | | | | |
| | Pigment | Carbon MA-100 | 10 | 10 | 10 | 10 | 10 | 10 | 10 | 10 | 10 | 10 |
| Hydroxyl group- and carboxyl group-containing resin (A) | | Acrylic resin particles (A1'-1) | 30 | 30 | 30 | | | | | 30 | | |
| | | Acrylic resin particles (A1'-2) | | | | | | | | | | |
| | | Acrylic resin particles (A1"-1) | | | | 30 | 30 | 30 | 30 | | 30 | 30 |
| | | Polyurethane resin dispersion (A3-1) | 20 | 20 | 20 | 20 | 20 | 20 | | 20 | 20 | 20 |
| | | Polyurethane resin dispersion (A3-2) | | | | | | | | | | |
| Other resin | | Polyurethane resin dispersion (U-1) | | | | | | | 20 | | | |
| Blocked polyisocyanate compound (B) | | Blocked polyisocyanate compound (B-1) | 30 | 20 | | 30 | | | | 30 | | |
| | | Blocked polyisocyanate compound (B-2) | | | 30 | 30 | 30 | 20 | 30 | | 30 | 20 |
| Melamine resin(E) | | CYMEL325 | | 10 | | | | 10 | | | | 10 |
| Phosphate group-containing compound (C) | | Phosphate group-containing acrylic resin solution (C1'-1) | 2 | 2 | 2 | 2 | 2 | 2 | 2 | 2 | 2 | 2 |
| | | NACURE 4167(*1) | | | | | | | | | | |
| Other compounds | | NACURE 5523(*2) | | | | | | | | | | |

28

EP 4 052 807 A1

(continued)

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Aqueous coating composition No. | | | 1 | 2 | 3 | 4 | 5 | 6 | 7 | 8 | 9 | 10 |
| pH-adjusting basic compound (D) | Basic compound (D1) | N-Ethylmorpholine | 0.6 | 0.6 | 0.6 | 0.6 | 0.6 | 0.6 | 0.6 | 0 | 0 | 0 |
| | | N-Methylmorpholine | | | | | | | | | | |
| | | Morpholine | | | | | | | | | | |
| | | Triallylamine | | | | | | | | | | |
| | Basic compound (D) other than basic compound (D1) | 2-(Dimethylamino)ethanol | | | | | | | | | | |
| | | Triethanolamine | | | | | | | | | | |
| | | Triethylamine | | | | | | | | | | |
| Aqueous coating composition pH | | | 7.71 | 7.7 | 7.7 | 7.7 | 7.7 | 7.7 | 7.7 | 7.1 | 7.1 | 7.1 |
| Total amount of basic compound (D1) added (parts) | | | 3.4 | 3.4 | 3.4 | 3.4 | 3.4 | 3.4 | 3.4 | 2.8 | 2.8 | 2.8 |
| Total amount of basic compound (D) added (parts) | | | 3.4 | 3.4 | 3.4 | 3.4 | 3.4 | 3.4 | 3.4 | 2.8 | 2.8 | 2.8 |
| Amount of basic compound | (D1) in basic compound (D) (mass%) | | 100 | 100 | 100 | 100 | 100 | 100 | 100 | 100 | 100 | 100 |
| Storage stability | pH variation | | G | VG | G | G | G | VG | G | G | G | VG |
| | Viscosity change rate | | VG | VG | VG | VG | VG | VG | VG | G | G | G |

29

[Table 1-2]

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| Aqueous coating composition No. | | | 11 | 12 | 13 | 14 | 15 | 16 | 17 | 18 | 19 | 20 |
| Pigment dispersion | Hydroxyl group-and carboxyl group-containing resin (A) | Pigment dispersion name | P-1 | P-1 | P-1 | P-1 | P-1 | P-1 | P-1 | P-1 | P-1 | P-1 |
| | | Polyester resin solution (A2-1) | 20 | 20 | 20 | 20 | 20 | 20 | 20 | 20 | 20 | 20 |
| | | Polyester resin solution (A2-2) | | | | | | | | | | |
| | Pigment | Carbon MA-100 | 10 | 10 | 10 | 10 | 10 | 10 | 10 | 10 | 10 | 10 |
| Hydroxyl group- and carboxyl group-containing resin (A) | | Acrylic resin particles (A1'-1) | 30 | 30 | 30 | | 30 | 30 | 30 | 30 | 30 | 30 |
| | | Acrylic resin particles (A1'-2) | | | | | | | | | | |
| | | Acrylic resin particles (A1"-1) | | | | 30 | | | | | | |
| | | Polyurethane resin dispersion (A3-1) | 20 | 20 | 20 | 20 | 20 | 20 | 20 | 20 | 20 | 20 |
| | | Polyurethane resin dispersion (A3-2) | | | | | | | | | | |
| Other resin | | Polyurethane resin dispersion (U-1) | | | | | | | | | | |
| Blocked polyisocyanate compound (B) | | Blocked polyisocyanate compound (B-1) | 30 | 20 | 30 | | 30 | 30 | 30 | 30 | 30 | 30 |
| | | Blocked nolyisoctanate compound (B-2) | | | | 30 | | | | | | |
| Melamine resin(E) | | CYMEL 325 | | 10 | | | | | | | | |
| Phosphate group-containing compound (C) | | Phosphate group-containing acrylic resin solution (C1'-1) | 2 | 2 | 2 | 2 | | 2 | 2 | 2 | 2 | 2 |
| | | NACURE 4167(*1) | | | | | 1 | | | | | |
| Other compounds | | NACURE 5523(*2) | | | | | | | | | | |

EP 4 052 807 A1

(continued)

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| Aqueous coating composition No. | | | 11 | 12 | 13 | 14 | 15 | 16 | 17 | 18 | 19 | 20 |
| pH-adjusting basic compound (D) | Basic compound (D1) | N-Ethylmorpholine | 0.3 | 0.3 | 1.7 | 1.7 | 0.7 | | | | | |
| | | N-Methylmorpholine | | | | | | | 0.6 | | | |
| | | Morpholine | | | | | | | 0,6 | | | |
| | | Triallylamine | | | | | | | | 0.8 | | |
| | Basic compound (D) other than basic compound (D1) | 2-(Dimethylamino)ethanol | | | | | | | | | 0.5 | 1.5 |
| | | Triethanolamine | | | | | | | | | | |
| | | Triethylamine | | | | | | | | | | |
| Aqueous coating composition pH | | | 7.4 | 7.4 | 8.1 | 8.1 | 7.7 | 7.7 | 7.7 | 7.7 | 7.7 | 8.1 |
| Total amount of basic compound (D1) added (parts) | | | 3.1 | 3.1 | 4.5 | 4.5 | 3.5 | 3.4 | 3.4 | 3.5 | 2.8 | 2.8 |
| Total amount of basic compound (D) added (parts) | | | 3.1 | 3.1 | 4.5 | 4.5 | 3.5 | 3.4 | 3.4 | 3.5 | 3.3 | 4.3 |
| Amount of basic compound (D1) in basic compound (D) (mass%) | | | 100 | 100 | 100 | 100 | 100 | 100 | 100 | 100 | 85 | 65 |
| Storage stability | | pH variation | G | VG | G | G | G | G | G | G | G | VG |
| | | Viscosity change rate | G | G | VG | VG | G | VG | VG | G | VG | VG |

[Table 1-3]

| | | | Comparative Example | | | | | | | | |
|---|---|---|---|---|---|---|---|---|---|---|---|
| | | | 1 | 2 | 3 | 4 | 5 | 6 | 7 | 8 | 9 |
| Aqueous coating composition No. | | | 21 | 22 | 23 | 24 | 25 | 26 | 27 | 28 | 29 |
| Pigment dispersion | Pigment dispersion name | | P-1 | P-1 | P-2 | P-2 | P-2 | P-2 | P-1 | P-1 | P-1 |
| | Hydroxyl group-and carboxyl group-containing resin (A) | Polyester resin solution (A2-1) | 20 | 20 | | | | | 20 | 20 | 20 |
| | | Polyester resin solution (A2-2) | | | 20 | 20 | 20 | 20 | | | |
| | Pigment | Carbon MA-100 | 10 | 10 | 10 | 10 | 10 | 10 | 10 | 10 | 10 |
| Hydroxyl group- and carboxyl group-containing resin (A) | | Acrylic resin particles (A1'-1) | 30 | 30 | | | | | 30 | 30 | 30 |
| | | Acrylic resin particles (A1'-2) | | | 30 | 30 | 30 | 30 | | | |
| | | Acrylic resin particles (A1"-1) | | | | | | | | | |
| | | Polyurethane resin dispersion (A3-1) | 20 | 20 | | 20 | | | 20 | 20 | 20 |
| | | Polyurethane resin dispersion (A3-2) | | | 20 | | 20 | 20 | | | |
| Other resin | | Polyurethane resin dispersion (U-1) | | | | | | | | | |
| Blocked polyisocyanate compound (B) | | Blocked polyisocyanate compound (B-1) | 30 | 20 | 30 | 30 | 30 | 30 | | 30 | 30 |
| | | Blocked polyisocyanate compound (B-2) | | | | | | | | | |
| Melamine resin(E) | | CYMEL 325 | | 10 | | | | | 30 | | |
| Phosphate group-containing compound (C) | | Phosphate group-containing acrylic resin solution (C1'-1) | 2 | 2 | 2 | 2 | 2 | 2 | 2 | | |
| | | NACURE 4167(∗1) | | | | | | | | | |
| Other compounds | | NACURE 5523(*2) | | | | | | | | | 1 |

(continued)

| | | | Comparative Example | | | | | | | | |
|---|---|---|---|---|---|---|---|---|---|---|---|
| | | | 1 | 2 | 3 | 4 | 5 | 6 | 7 | 8 | 9 |
| Aqueous coating composition No. | | | 21 | 22 | 23 | 24 | 25 | 26 | 27 | 28 | 29 |
| pH-adjusting basic compound (D) | Basic compound (D1) | N-Ethylmorpholine | 3.2 | 3.2 | | 0.5 | | | 0.6 | 0.2 | 0.9 |
| | | N-Methylmorpholine | | | | | | | | | |
| | | Morpholine | | | | | | | | | |
| | | Triallylamine | | | | | | | | | |
| | Basic compound (D) other than basic compound (D1) | 2-(Dimethylamino) ethanol | | | 0.4 | | | | | | |
| | | Triethanolamine | | | | | 0.8 | | | | |
| | | Triethylamine | | | | | | 0.3 | | | |
| I Aqueous coating composition pH | | | 8.3 | 8.3 | 7.7 | 7.7 | 7.7 | 7.7 | 7.7 | 7.7 | 7.7 |
| Total amount of basic compound (D1) added (parts) | | | 6.0 | 6.0 | 0 | 1.1 | 0 | 0 | 3.4 | 3.0 | 3.7 |
| Total amount of basic compound (D) added (parts) | | | 6.0 | 6.0 | 2.6 | 2.8 | 3.0 | 2.5 | 3.4 | 3.0 | 3.7 |
| Amount of basic compound (D1) in basic compound (D) (mass%) | | | 100 | 100 | 0 | 40 | 0 | 0 | 100 | 100 | 100 |
| Storage stability | | pH variation | VG | VG | VG | VG | VG | G | G | VG | P |
| | | Viscosity change rate | VG | VG | VG | VG | VG | VG | VG | VG | P |
| (∗1) "NACURE 4167": Triethylamine salt of alkylphosphoric acid, trade name of King Industries Co., active ingredient: 25%.<br>(*2) "NACURE 5523": Amine salt of dodecylbenzenesulfonic acid, trade name of King Industries Co., active ingredient: 35%. | | | | | | | | | | | |

Coating method

(Fabrication of article to be coated for testing)

A steel sheet (450 mm × 300 mm × 0.8 mm) that had been subjected to zinc phosphate treatment was electrodeposited with ELECRON GT-10 (trade name of Kansai Paint Co., Ltd., cationic electrodeposition coating material) to a dry film thickness of 20 $\mu$m, and was heated at 170°C for 30 minutes for curing.

Test sheets were obtained as simulated electrodeposited outer and inner plates.

Example 21

(First multilayer coating film-forming step)

A rotary atomizing electrostatic coater was used for electrostatic coating of "WP-505T" (trade name of Kansai Paint Co., Ltd., polyester melamine resin-based aqueous intermediate coating material) onto the obtained test sheet to a cured film thickness of 30 $\mu$m, and it was allowed to stand for 5 minutes to form an uncured intermediate coating film.

A rotary atomizing electrostatic coater was then used for electrostatic coating of aqueous coating composition No. 1 onto the uncured intermediate coating film to a dry film thickness of 15 $\mu$m, and it was allowed to stand for 5 minutes and subsequently preheated at 80°C for 3 minutes to form an uncured colored coating film.

Next, "SOFLEX #520 CLEAR" (trade name of Kansai Paint Co., Ltd., two-pack type acrylurethane-based organic solvent clear coating material comprising hydroxyl group-containing acrylic resin and polyisocyanate compound) was electrostatically coated onto the colored coating film to a dry film thickness of 35 μm, and it was allowed to stand for 7 minutes to form a clear coating film.

It was then heated at 80°C for 30 minutes for heat curing of the intermediate coating film, colored coating film and clear coating film, to prepare test sheet (A-1).

(First coating film-forming step and second coating film-forming step)

Each test sheet was electrostatically coated with the aqueous coating composition No. 1 using a rotary atomizing electrostatic coater to a dry film thickness of 15 μm, and allowed to stand for 5 minutes, after which it was heated at 80°C for 30 minutes to fabricate a test sheet (B-1).

Examples 22 to 42 and Comparative Examples 10 to 18

Test sheets were fabricated in the same manner as Example 21, except that the type of aqueous coating composition and the heating temperature used in Example 21 were changed as shown in Table 2.

Each of the obtained test sheets was evaluated by the following test methods. The evaluation results are shown in Table 2.

(Test methods)

Low-temperature curability: The pencil hardness of each test sheet obtained in the Examples and Comparative Examples was measured according to the "Scratch hardness (pencil method)" of JIS K 5600-5-4(1999). The pencil hardness is evaluated in the order: 6Bx < 6B < 5B < 4B < 3B < 2B < B < HB < F < H < 2H, with a pencil hardness of HB or greater considered acceptable. The evaluation results are shown in Table 2.

Water-resistant adhesiveness: Each test sheet obtained in the Examples and Comparative Examples was immersed for 240 hours in hot water at 40°C, raised up, and the moisture on the surface was wiped off, immediately after which 100 2 mm × 2 mm square grids were formed on the surface of the coating film according to JIS K 5600-5-6(1990), and adhesive tape was attached to the surface and abruptly peeled off, and subsequently the number of square grids with coating film remaining on the coated surface was evaluated. Scores of VG and G are acceptable. The evaluation results are shown in Table 2.

VG: Remaining squares/total squares = 100/100 with no edge chipping
G: Remaining squares/total squares = 100/100 with edge chipping
F: Number of remaining squares/total number of squares = 99-90/100
P: Number of remaining squares/total number of squares = ≤89/100.

Water-resistant hardness: Each test sheet obtained in the Examples and Comparative Examples was immersed for 240 hours in hot water at 40°C, and after drying at 20°C for 12 hours, the pencil hardness of the coating surface of the test sheet was measured according to the "Scratch hardness (pencil method)" of JIS K 5600-5-4(1999). A pencil hardness of B or greater was considered acceptable. The evaluation results are shown in Table 2.

Chipping resistance: Each test sheet obtained in the Examples and Comparative Examples was set on the sample holding stage of a Model JA-400 gravel test instrument (trade name of Suga Test Instruments Co., Ltd., chipping resistance tester), and 50 g of crushed granite of #7 grain size was impacted onto the test sheet at an angle of 45°, using compressed air at 0.39 MPa (4 kgf/cm2), at 0°C at a distance of 30 cm from the test sheet. The obtained test sheet was then washed with water and dried, and cloth adhesive tape (product of Nichiban Co., Ltd.) was attached to the coating surface and peeled off, after which the extent of damage in the coating film was visually examined and evaluated on the following scale. Scores of VG and G are acceptable. The evaluation results are shown in Table 2.

VG: Very small damage size, no exposure of electrodeposition surface or base steel sheet.
G: Small damage size, no exposure of electrodeposition surface or base steel sheet.
F: Small damage size, but some exposure of electrodeposition surface or base steel sheet.
P: Considerable damage size, with exposure of base steel sheet.

[Table 2]

| | | Aqueous coating composition No. | Heating temperature | Test sheet type | Evaluation results | | | |
|---|---|---|---|---|---|---|---|---|
| | | | | | Low-temperature curability | Water-resistant adhesiveness | Water-resistant hardness | Chipping resistance |
| Example | 21 | 1 | 80°C | A-1 | F | VG | F | VG |
| | | | | B-1 | HB | VG | HB | G |
| | 22 | 1 | 65°C | A-2 | HB | VG | HB | VG |
| | | | | B-2 | HB | G | B | G |
| | 23 | 1 | 100°C | A-3 | 2H | VG | 2H | VG |
| | | | | B-3 | 2H | VG | H | VG |
| | 24 | 2 | 80°C | A-4 | H | VG | F | VG |
| | | | | B-4 | F | G | HB | G |
| | 25 | 3 | 80°C | A-5 | F | VG | F | VG |
| | | | | B-5 | F | VG | F | VG |
| | 26 | 4 | 80°C | A-6 | H | VG | F | VG |
| | | | | B-6 | F | VG | F | VG |
| | 27 | 5 | 80°C | A-7 | H | VG | F | VG |
| | | | | B-7 | H | VG | F | VG |
| | 28 | 6 | 80°C | A-8 | H | VG | F | VG |
| | | | | B-8 | 2H | G | HB | G |
| | 29 | 7 | 80°C | A-9 | H | VG | F | VG |
| | | | | B-9 | H | VG | F | VG |
| | 30 | 8 | 80°C | A-10 | H | VG | F | VG |
| | | | | B-10 | F | VG | HB | G |
| | 31 | 9 | 80°C | A-11 | H | VG | F | VG |
| | | | | B-11 | H | VG | F | VG |
| | 32 | 10 | 80°C | A-12 | H | VG | F | VG |
| | | | | B-12 | 2H | G | F | G |
| | 33 | 11 | 80°C | A-13 | F | VG | F | VG |
| | | | | B-13 | F | VG | HB | G |
| | 34 | 12 | 80°C | A-14 | F | VG | F | VG |
| | | | | B-14 | H | G | HB | G |
| | 35 | 13 | 80°C | A-15 | F | VG | F | VG |
| | | | | B-15 | HB | G | B | G |
| | 36 | 14 | 80°C | A-16 | F | VG | F | VG |
| | | | | B-16 | F | VG | HB | VG |
| | 37 | 15 | 80°C | A-17 | F | VG | F | VG |
| | | | | B-17 | HB | G | HB | G |
| | 38 | 16 | 80°C | A-18 | F | VG | F | VG |
| | | | | B-18 | HB | VG | HB | G |
| | 39 | 17 | 80°C | A-19 | F | VG | F | VG |
| | | | | B-19 | HB | G | HB | G |
| | 40 | 18 | 80°C | A-20 | F | VG | HB | VG |
| | | | | B-20 | HB | G | B | G |
| | 41 | 19 | 80°C | A-21 | F | VG | F | VG |
| | | | | B-21 | HB | G | HB | G |
| | 42 | 20 | 80°C | A-22 | F | VG | HB | VG |
| | | | | B-22 | HB | G | B | G |
| Comparative Example | 10 | 21 | 80°C | A-23 | F | VG | HB | VG |
| | | | | B-23 | B | G | 2B | G |
| | 11 | 22 | 80°C | A-24 | F | VG | HB | VG |
| | | | | B-24 | HB | F | 2B | F |
| | 12 | 23 | 80°C | A-25 | HB | G | B | VG |
| | | | | B-25 | 3B | P | 6B× | F |
| | 13 | 24 | 80°C | A-26 | HB | VG | HB | VG |
| | | | | B-26 | B | G | 2B | G |
| | 14 | 25 | 80°C | A-27 | B | P | 3B | G |
| | | | | B-27 | 4B | P | 6B× | P |
| | 15 | 26 | 80°C | A-28 | HB | G | B | VG |
| | | | | B-28 | 3B | F | 5B | F |
| | 16 | 27 | 80°C | A-29 | F | VG | HB | F |
| | | | | B-29 | F | P | 4B | P |
| | 17 | 28 | 80°C | A-30 | 5B | P | 6B× | P |
| | | | | B-30 | 3B | P | 6B× | P |
| | 18 | 29 | 80°C | A-31 | F | VG | F | VG |
| | | | | B-31 | HB | VG | HB | G |

Embodiments and Examples of the invention were described above, but the invention is not limited to these embodiments and may incorporate various modifications based on the technical concept of the invention.

The constructions, methods, steps, forms, materials and numerical values mentioned for the embodiments and Examples serve merely for illustration, and different constructions, methods, steps, forms, materials and numerical values may be used as necessary.

The constructions, methods, steps, forms, materials and numerical values of the embodiment described above may also be combined together as long as the gist of the invention is maintained.

**Claims**

1. An aqueous coating composition comprising (A) a hydroxyl group- and carboxyl group-containing resin, (B) a blocked polyisocyanate compound, (C) a phosphate group-containing compound and (D) a basic compound, wherein the basic compound (D) comprises:

   (D1) a basic compound having an acid dissociation constant (PKa) in the range of 7.0 to 8.5 and a boiling point in the range of 100 to 200°C, and
   the content ratio of the basic compound (D1) is in the range of 50 to 100 mass% based on the mass of the basic compound (D), and the pH of the aqueous coating composition is in the range of 7.0 to 8.2.

2. The aqueous coating composition according to claim 1, wherein at least a portion of the blocking agent of the blocked polyisocyanate compound (B) is an active methylene-based blocking agent.

3. The aqueous coating composition according to claim 1 or 2, wherein at least one type of the phosphate group-containing compound (C) is a phosphate group-containing resin (C1).

4. The aqueous coating composition according to claim 3, wherein at least one type of the phosphate group-containing resin (C1) is a phosphate group-containing acrylic resin (C1').

5. The aqueous coating composition according to any one of claims 1 to 4, wherein the basic compound (D1) having an acid dissociation constant (PKa) in the range of 7.0 to 8.5 and a boiling point in the range of 100 to 200°C is N-methylmorpholine and/or N-ethylmorpholine.

6. The aqueous coating composition according to any one of claims 1 to 5, further comprising a melamine resin (E).

7. A method of forming a coating film, comprising applying an aqueous coating composition according to any one of claims 1 to 6 onto an article to be coated to form an uncured colored coating film, and then heating and curing the uncured colored coating film at a temperature in the range of 60 to 110°C.

8. An automobile body coating method comprising:

   a step of forming a first multilayer coating film on an outer plate of an automobile body, and
   a step of forming a second coating film on an inner plate of an automobile body, wherein the step of forming the first multilayer coating film includes:

   (1a) an outer plate colored base coating film-forming step in which an aqueous coating composition (X) is coated onto an outer plate of the automobile body to form an uncured outer plate colored base coating film (BCo),
   (1b) an outer plate clear coating film-forming step in which a clear coating material (Y) is coated onto the uncured outer plate colored base coating film (BCo) to form an uncured outer plate clear coating film (CCo), and
   (1c) a baking step in which the uncured outer plate colored base coating film (BCo) and the uncured outer plate clear coating film (CCo) are heated to simultaneously cure the coating films,

   the step of forming the second coating film includes:

   (2a) an inner plate colored coating film-forming step in which the aqueous coating composition (X) is coated onto an inner plate of the automobile body to form an uncured inner plate colored coating film (PCi), and

(2b) a baking step in which the uncured inner plate colored coating film (PCi) is heated and cured, and the aqueous coating composition (X) is an aqueous coating composition according to any one of claims 1 to 6.

9. The automobile body coating method according to claim 8, wherein the heating temperature in the baking step (lc) and the baking step (2b) is in the range of 60 to 110°C.

10. The automobile body coating method according to claim 8 or 9, wherein the baking step (1c) and the baking step (2b) are carried out simultaneously.

## INTERNATIONAL SEARCH REPORT

International application No.

PCT/JP2020/026283

### A. CLASSIFICATION OF SUBJECT MATTER

Int. Cl. B05D3/00(2006.01)i, B05D3/02(2006.01)i, B05D5/06(2006.01)i, B05D7/24(2006.01)i, G09D5/00(2006.01)i, C09D201/06(2006.01)i, C09D201/08(2006.01)i, C09D7/63(2018.01)i, C09D7/65(2018.01)i
FI: C09D201/06, C09D201/08, C09D7/63, C09D7/65, B05D7/24 302T, B05D7/24 302S, B05D7/24 303A, B05D7/24 303E, B05D7/24 302P, B05D5/06 G, B05D3/00 D, B05D3/02 Z, C09D5/00 D

According to International Patent Classification (IPC) or to both national classification and IPC

### B. FIELDS SEARCHED

Minimum documentation searched (classification system followed by classification symbols)
Int. Cl. B05D3/00, B05D3/02, B05D5/06, B05D7/24, C09D5/00, C09D201/06, C09D201/08, C09D7/63, C09D7/65

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-256232 A (ASAHI KASEI CHEMICALS CORP.) 22 December 2011, examples 1-6 | 1-10 |
| A | WO 2017/115804 A1 (NIPPON PAINT AUTOMOTIVE COATINGS CO., LTD.) 06 July 2017, examples 1-18 | 1-10 |

☐ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 14.09.2020 | 24.09.2020 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

| Patent Documents referred to in the Report | Publication Date | Patent Family | Publication Date |
|---|---|---|---|
| JP 2011-256232 A | 22.12.2011 | (Family: none) | |
| WO 2017/115804 A1 | 06.07.2017 | EP 3399001 A1 examples 1-18 CN 108713048 A | |

Form PCT/ISA/210 (patent family annex) (January 2015)

**EP 4 052 807 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005225907 A